# EUROPEAN PATENT SPECIFICATION

(11) **EP 4 521 849 B1**
(45) Date of publication and mention of the grant of the patent: **02.09.2026**
(21) Application number: 24740794.3
(22) Date of filing: 19.07.2024
(51) Int. Cl.: H04W 76/40, H04W 4/06, H04W 4/80, H04W 12/03, G06F 3/16, H04W 4/08, H04M 1/72412, H04W 52/52, H04W 92/18

(54) **ELECTRONIC DEVICE AND METHOD FOR TRANSMITTING BROADCAST DATA**
ELEKTRONISCHE VORRICHTUNG UND VERFAHREN ZUR ÜBERTRAGUNG VON RUNDFUNKDATEN
DISPOSITIF ÉLECTRONIQUE ET PROCÉDÉ DE TRANSMISSION DE DONNÉES DE DIFFUSION

(30) Priority: 19.07.2023 KR 20230093750; 05.09.2023 KR 20230117841
(43) Date of publication of application: 12.03.2025
(73) Proprietor: Samsung Electronics Co., Ltd, Suwon-si, Gyeonggi-do 16677 (KR)
(72) Inventor: CHEONG, Gupil, Suwon-si Gyeonggi-do 16677 (KR); KANG, Doosuk, Suwon-si Gyeonggi-do 16677 (KR); YOO, Hyungseoung, Suwon-si Gyeonggi-do 16677 (KR); LEE, Youngkow, Suwon-si Gyeonggi-do 16677 (KR); HAN, Euibum, Suwon-si Gyeonggi-do 16677 (KR)
(74) Representative: HGF
(86) International application number: PCT/KR2024/010495
(87) International publication number: WO 2025/018847

(56) References cited:
- CN-B- 112 260 778
- CN-B- 113 347 578
- KR-A- 20220 094 363
- KR-A- 20230 043 671
- US-A1- 2022 322 209
- US-A1- 2023 010 914

## Description

### [Technical Field]

Various embodiments of the disclosure relate to an electronic device and a method for transmitting broadcast data in the electronic device.

### [Background Art]

Low energy (LE) electronic devices of Bluetooth core version 5.2 or the subsequent versions may support the LE audio service through a broadcast isochronous stream (BIS) method or a connected isochronous stream (CIS) method.

In general, BIS services using LE audio are mainly used in video/audio electronic devices that may communicate with multiple users, and may be used as audio/video services for an unspecified number of people for a long time. Recently, the use of BIS services in TVs or mobile electronic devices is gradually expanding for the purpose of simultaneously providing audio services to a small group of users rather than an unspecified number of users.
CN113347578B discloses, according to its abstract, that for an audio data transmission method, device, system, storage medium and headset, a method comprises: receiving pairing information, the pairing information comprising the access code of the source device and the synchronous broadcast group information, and one of the source end device and other destination end devices; joining the synchronous broadcast group in the current synchronous broadcast event according to the pairing information, creating a synchronous broadcast event that is completely aligned with the source device to receive audio data from the source device or other destination devices; the pairing information is broadcast in the next simulcast event.
CN 112 260 778 B discloses, according to its abstract, that for a broadcast channel evaluation method and related products, the method comprises: the first terminal device broadcasts the first message in M synchronous broadcast control sub-events, the first message is used to request the second terminal device to send the broadcast channel evaluation report, the second terminal device receives the first message and sends the second message, the second message includes a broadcast channel evaluation report in which the second terminal equipment occupies the broadcast channel, and the first terminal device receives the second message from M second terminal devices respectively, The first terminal device determines the first broadcast channel based on the evaluation report of each broadcast channel in M second messages.
US 2023010914 A1 discloses, according to its abstract, a method and system for data transmission, chip, an electronic device, and a computer readable storage medium. The method applied at a first Bluetooth end includes: establishing a point-to-point connection with a second Bluetooth end; acquiring identity information of the second Bluetooth end through the point-to-point connection; and sending broadcast isochronous group information BIG Info to the second Bluetooth end through the point-to-point connection when the identity information of the second Bluetooth end is verified, to enable the second Bluetooth end to receive a data stream of a broadcast isochronous group BIG sent by the first Bluetooth end according to the BIG Info.

### [Disclosure of Invention]

### [Solution to Problems]

The scope of protection conferred is determined from the claims.

Also disclosed herein is that an electronic device may comprise a communication circuit and at least one processor connected to the communication circuit. The at least one processor may identify a request for a broadcast isochronous group (BIG) configured to stream broadcast isochronous stream (BIS) data from a plurality of BIS source devices including the electronic device to a plurality of BIS sink devices. The at least one processor may determine a plurality of parameters for the BIG, and generate the BIG based on the plurality of parameters for the BIG. The at least one processor may control to transmit periodic advertising (PA) and BIS data based on the plurality of parameters for the BIG.

Also disclosed herein is that an electronic device may comprise a communication circuit and at least one processor connected to the communication circuit. The at least one processor may identify a request for a broadcast isochronous group (BIG) configured to stream broadcast isochronous stream (BIS) data from a plurality of BIS source devices including the electronic device to a plurality of BIS sink devices. The at least one processor may receive BIG information including a plurality of parameters for the BIG. The at least one processor may generate the BIG based on the plurality of parameters for the BIG. The at least one processor may control to transmit periodic advertising (PA) and BIS data based on the plurality of parameters for the BIG.

Also disclosed herein is that a method for operating an electronic device may comprise identifying a request for a broadcast isochronous group (BIG) configured to stream broadcast isochronous stream (BIS) data from a plurality of BIS source devices including the electronic device to a plurality of BIS sink devices. The method for operating the electronic device may comprise determining a plurality of parameters for the at least one BIG, and generating BIG information including the plurality of parameters for the at least one BIG. The method for operating the electronic device may comprise transmitting periodic advertising (PA) and BIS data based on the plurality of parameters for the BIG.

Also disclosed herein is that a method for operating an electronic device may comprise identifying a request for a broadcast isochronous group (BIG) configured to stream broadcast isochronous stream (BIS) data from a plurality of BIS source devices including the electronic device to a plurality of BIS sink devices. The method for operating the electronic device may comprise receiving BIG information including a plurality of parameters for the BIG. The method for operating the electronic device may comprise generating the BIG based on the plurality of parameters for the BIG. The method for operating the electronic device may comprise transmitting periodic advertising (PA) and BIS data based on the plurality of parameters for the BIG.

Also disclosed herein is that there may be provided a computer-readable storage medium storing at least one instruction. The at least one instruction may, when executed by at least one processor, enable an electronic device to perform a plurality of operations. The plurality of operations may comprise identifying a request for a broadcast isochronous group (BIG) configured to stream broadcast isochronous stream (BIS) data from a plurality of BIS source devices including the electronic device to a plurality of BIS sink devices. The plurality of operations may comprise determining a plurality of parameters for the at least one BIG, and generating BIG information including the plurality of parameters for the at least one BIG. The plurality of operations may comprise transmitting periodic advertising (PA) and BIS data based on the plurality of parameters for the BIG.

Also disclosed herein is that there may be provided a computer-readable storage medium storing at least one instruction. The at least one instruction may, when executed by at least one processor, enable an electronic device to perform a plurality of operations. The plurality of operations may comprise identifying a request for a broadcast isochronous group (BIG) configured to stream broadcast isochronous stream (BIS) data from a plurality of BIS source devices including the electronic device to a plurality of BIS sink devices. The plurality of operations may comprise receiving BIG information including a plurality of parameters for the BIG. The plurality of operations may comprise generating the BIG based on the plurality of parameters for the BIG. The plurality of operations may comprise transmitting periodic advertising (PA) and BIS data based on the plurality of parameters for the BIG.

### [Brief Description of Drawings]

FIG. 1 is a block diagram schematically illustrating an electronic device 101 in a network environment 100 according to an embodiment;
FIG. 2 is a block diagram 200 illustrating the audio module 170 according to an embodiment;
FIG. 3 illustrates an example of operations of a plurality of electronic devices according to an embodiment;
FIG. 4 illustrates a link layer packet format according to an embodiment;
FIG. 5 is a view illustrating an extended advertising (EA) and periodic advertising (PA) event according to an embodiment;
FIG. 6 is a view illustrating a BIG event and a BIS event according to an embodiment;
FIG. 7A illustrates an example of BISs having a sequential arrangement according to an embodiment;
FIG. 7B illustrates an example of BISs having an interleaved arrangement according to an embodiment;
FIGS. 8A to 8C each illustrate an example of payload allocation in a BIS according to an embodiment;
FIG. 9 illustrates an example in which a plurality of electronic devices are synchronized with one BIG to transmit BIS data and PA according to an embodiment;
FIG. 10 illustrates an example in which a plurality of electronic devices are synchronized with one BIG and BIS data transmission and PA transmission are set to be different according to an embodiment;
FIG. 11A illustrates an example in which a plurality of electronic devices are synchronized with one BIG through a network according to an embodiment;
FIG. 11B illustrates an example in which an electronic device shares BIG information through PA transmission and direct connection according to an embodiment;
FIG. 12 illustrates an example in which a plurality of electronic devices are synchronized with one BIG through a BIG generation command according to an embodiment;
FIG. 13 illustrates an example in which a plurality of electronic devices are synchronized with one BIG through PA according to an embodiment;
FIG. 14 is a flowchart illustrating an operation method of a first electronic device operating as a BIS source host according to an embodiment;
FIG. 15 is a flowchart illustrating an operation method of a second electronic device operating as a BIS source according to an embodiment;
FIG. 16 illustrates an example for describing operations of a BIG including a plurality of electronic devices according to an embodiment;
FIG. 17 illustrates an example of BIG information according to an embodiment;
FIG. 18 illustrates an example of BIG information set by an electronic device according to an embodiment;
FIG. 19 illustrates an example of BIG information set by an electronic device according to an embodiment;
FIG. 20A illustrates an example in which an electronic device generates a BIG and transmits only a PA according to an embodiment;
FIG. 20B illustrates an example in which an electronic device generates a BIG and transmits a PA and an empty PDU according to an embodiment;
FIG. 20C illustrates an example in which an electronic device generates a BIG and transmits a PA and an empty PDU according to an embodiment;
FIG. 20D illustrates an example in which an electronic device generates a BIG and transmits PA and BIS data according to an embodiment;
FIG. 21 illustrates an example of an operation of transferring an SDU corresponding to a PDU inside an electronic device according to an embodiment;
FIG. 22 illustrates an example of an operation for transmitting the same SDU to same PDU between electronic devices according to an embodiment;
FIG. 23 illustrates an example of an operation in which an electronic device having an output function receives and processes BIS data according to an embodiment;
FIG. 24 illustrates an example of a continuous BIS data reception operation according to a movement of an electronic device according to an embodiment;
FIG. 25 illustrates an example of an operation of resynchronizing the same BIG according to a determination by an electronic device according to an embodiment;
FIG. 26 is a view illustrating operations of a first electronic device generating BIG information according to an embodiment; and
FIG. 27 is a view illustrating operations of a second electronic device receiving BIG information according to an embodiment.

### [Mode for the Invention]

Hereinafter, an embodiment of the disclosure is described with reference to the accompanying drawings. When determined to make the subject matter of an embodiment of the disclosure unclear, the detailed description of the relevant known art or functions may be skipped. The terms described below are defined considering the functions in embodiments of the present disclosure and may be replaced with other terms according to the intention or practice of the user or operator. Therefore, the terms should be defined based on the overall disclosure.

The terms as used herein are provided merely to describe some embodiments thereof, but not to limit an embodiment of the disclosure. The terms as used herein are provided merely to describe some embodiments thereof, but not to limit the scope of other embodiments of the present disclosure. Unless otherwise defined, all terms including technical and scientific terms used herein have the same meaning as commonly understood by one of ordinary skill in the art to which the embodiments of the disclosure pertain and should not be interpreted as overly broad or narrow. As used herein, terms wrong or inappropriate for representing the disclosure may be replaced with and understood as more proper ones to represent the disclosure by one of ordinary skill in the art. General terms as used herein should be interpreted in the context of the specification or as defined in dictionaries.

As used herein, the singular forms "a," "an," and "the" are intended to include the plural forms as well, unless the context clearly indicates otherwise. As used herein, the term "comprise " or "include" should not be interpreted as necessarily including all of several components or operations set forth herein but should rather be interpreted as omitting some components or operations or adding more components or operations.

As used herein, the terms "first" and "second" may be used to describe various components, but the components should not be limited by the terms. The terms are used only to distinguish one component from another. For example, a first component may be denoted a second component, and vice versa without departing from the scope of the present disclosure.

It will be understood that when an element or layer is referred to as being "on," "connected to," "coupled to," or "adjacent to" another element or layer, it can be directly on, connected, coupled, or adjacent to the other element or layer, or intervening elements or layers may be present. In contrast, when a component is "directly connected to" or "directly coupled to" another component, no other intervening components may intervene therebetween.

Hereinafter, an embodiment of the disclosure will be described in detail with reference to the accompanying drawings. The same reference denotations may be used to refer to the same or substantially the same elements throughout the specification and the drawings. No duplicate description of the same elements is given herein. When determined to make the subject matter of an embodiment of the disclosure unclear, the detailed description of the known art or functions may be skipped. The accompanying drawings are provided for an easier understanding of the reception but the disclosure should not be limited thereby.

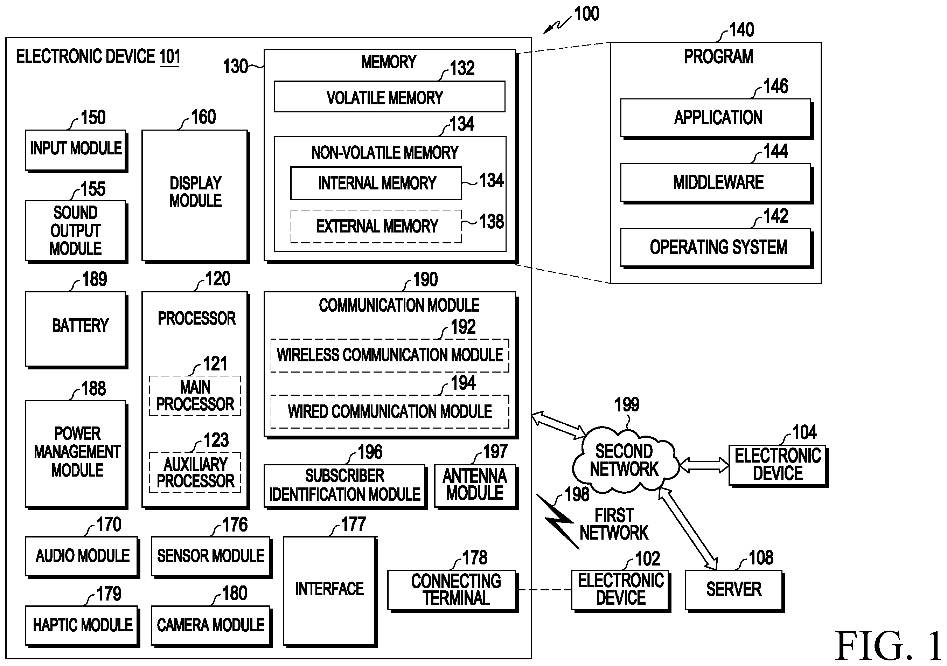

FIG. 1 is a block diagram schematically illustrating an electronic device 101 in a network environment 100 according to an embodiment;

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. According to an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment of the disclosure may be one of various types of devices. The electronic devices may include, e.g., a portable communication device (e.g., a smartphone), a computer device, a portable multimedia device, a portable medical device, a camera, a wearable device, a home appliance, a wireless earphone, or ear buds. The electronic devices according to an embodiment are not limited to those described above.

An embodiment of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

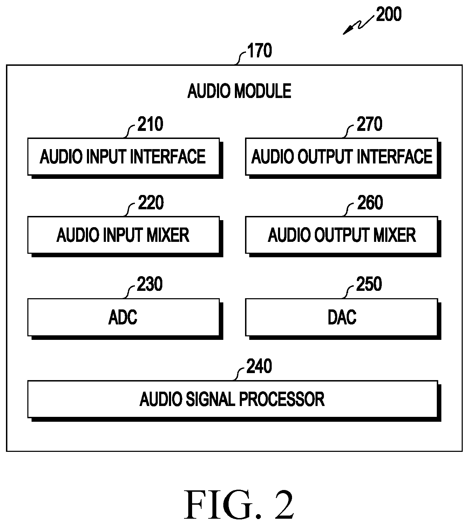

FIG. 2 is a block diagram 200 illustrating the audio module 170 according to an embodiment;
Referring to FIG. 2, the audio module 170 may include, for example, an audio input interface 210, an audio input mixer 220, an analog-to-digital converter (ADC) 230, an audio signal processor 240, a digital-to-analog converter (DAC) 250, an audio output mixer 260, or an audio output interface 270.

The audio input interface 210 may receive an audio signal corresponding to a sound obtained from the outside of the electronic device 101 via a microphone (e.g., a dynamic microphone, a condenser microphone, or a piezo microphone) that is configured as part of the input module 150 or separately from the electronic device 101. For example, if an audio signal is received from the external electronic device 102 (e.g., a headset or a microphone), the audio input interface 210 may be connected with the external electronic device 102 directly (e.g., wiredly) via the connecting terminal 178, or wirelessly (e.g., BluetoothTM communication) via the wireless communication module 192 to receive the audio signal. According to an embodiment, the audio input interface 210 may receive a control signal (e.g., a volume adjustment signal received via an input button) related to the audio signal obtained from the external electronic device 102. The audio input interface 210 may include a plurality of audio input channels and may receive a different audio signal via a corresponding one of the plurality of audio input channels, respectively. According to an embodiment, additionally or alternatively, the audio input interface 210 may receive an audio signal from another component (e.g., the processor 120 or the memory 130) of the electronic device 101.

The audio input mixer 220 may synthesize a plurality of inputted audio signals into at least one audio signal. For example, according to an embodiment, the audio input mixer 220 may synthesize a plurality of analog audio signals inputted via the audio input interface 210 into at least one analog audio signal.

The ADC 230 may convert an analog audio signal into a digital audio signal. For example, according to an embodiment, the ADC 230 may convert an analog audio signal received via the audio input interface 210 or, additionally or alternatively, an analog audio signal synthesized via the audio input mixer 220 into a digital audio signal.

The audio signal processor 240 may perform various processing on a digital audio signal received via the ADC 230 or a digital audio signal received from another component of the electronic device 101. For example, according to an embodiment, the audio signal processor 240 may perform changing a sampling rate, applying one or more filters, interpolation processing, amplifying or attenuating a whole or partial frequency bandwidth, noise processing (e.g., attenuating noise or echoes), changing channels (e.g., switching between mono and stereo), mixing, or extracting a specified signal for one or more digital audio signals. According to an embodiment, one or more functions of the audio signal processor 240 may be implemented in the form of an equalizer.

The DAC 250 may convert a digital audio signal into an analog audio signal. For example, according to an embodiment, the DAC 250 may convert a digital audio signal processed by the audio signal processor 240 or a digital audio signal obtained from another component (e.g., the processor(120) or the memory(130)) of the electronic device 101 into an analog audio signal.

The audio output mixer 260 may synthesize a plurality of audio signals, which are to be outputted, into at least one audio signal. For example, according to an embodiment, the audio output mixer 260 may synthesize an analog audio signal converted by the DAC 250 and another analog audio signal (e.g., an analog audio signal received via the audio input interface 210) into at least one analog audio signal.

The audio output interface 270 may output an analog audio signal converted by the DAC 250 or, additionally or alternatively, an analog audio signal synthesized by the audio output mixer 260 to the outside of the electronic device 101 via the sound output module 155. The sound output module 155 may include, for example, a speaker, such as a dynamic driver or a balanced armature driver, or a receiver. According to an embodiment, the sound output module 155 may include a plurality of speakers. In such a case, the audio output interface 270 may output audio signals having a plurality of different channels (e.g., stereo channels or 5.1 channels) via at least some of the plurality of speakers. According to an embodiment, the audio output interface 270 may be connected with the external electronic device 102 (e.g., an external speaker or a headset) directly via the connecting terminal 178 or wirelessly via the wireless communication module 192 to output an audio signal.

According to an embodiment, the audio module 170 may generate, without separately including the audio input mixer 220 or the audio output mixer 260, at least one digital audio signal by synthesizing a plurality of digital audio signals using at least one function of the audio signal processor 240.

According to an embodiment, the audio module 170 may include an audio amplifier (not shown) (e.g., a speaker amplifying circuit) that is capable of amplifying an analog audio signal inputted via the audio input interface 210 or an audio signal that is to be outputted via the audio output interface 270. According to an embodiment, the audio amplifier may be configured as a module separate from the audio module 170.

LE electronic devices of Bluetooth core version 5.2 or the subsequent versions may support the LE audio service through a broadcast isochronous stream (BIS) method or a connected isochronous stream (CIS) method.

Various embodiments of the disclosure relate to a BIS method among audio services that may be provided between Bluetooth low energy (or BLE) electronic devices, and the BIS may have difficulty in securing reliability when data is transmitted and received through a non-acknowledgment protocol. To solve this problem, the BIS has a protocol for addressing the reliability issue in data transmission and reception by increasing the number of retransmissions for the same protocol data unit (PDU). In this case, since it is mandatory to retransmit the same PDU several times, resources to be allocated for coexistence with Wi-Fi or BT concurrency may be wasted. Further, mandatory retransmission may cause large current consumption of the electronic device, and since it is impossible to accurately respond to the surrounding environment, it is necessary to maintain a fixed bit rate, which may cause damage to the data transmission rate.

In the disclosure, the bit rate may refer to a data size in units of bits to be processed per second. For example, a bit per second (bps) may be used as the unit of the bit rate.

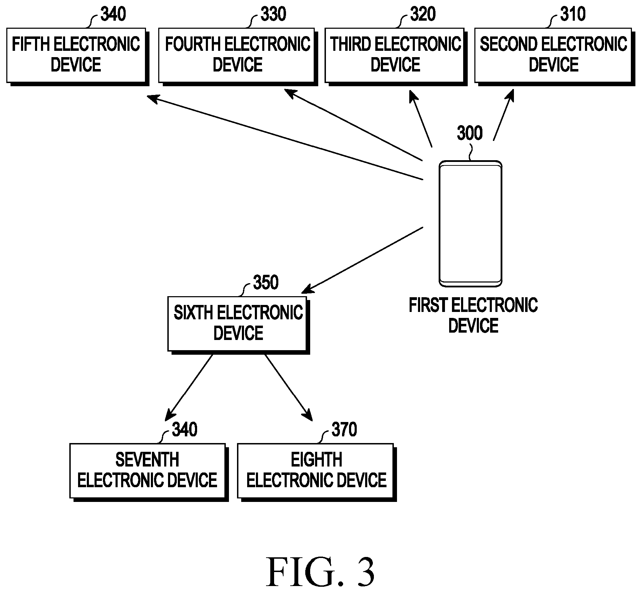

FIG. 3 illustrates an example of operations of a plurality of electronic devices according to an embodiment.

Referring to FIG. 3, each of the first electronic device 300 and the sixth electronic device 350 may be implemented as a portable communication device (e.g., a smartphone) or an electronic device (e.g., an audio device, a home appliance, a wearable device, a smart watch, and/or a smart ring). Each of the second to fifth electronic devices 310 to 340, the seventh electronic device 360, and the eighth electronic device 370 may be implemented as an electronic device (e.g., a wireless earphone, an audio device, a Bluetooth speaker, a home appliance, a wearable device, a smart watch, and/or a smart ring) including a speaker. The sixth electronic device 350 may receive data (or audio data) broadcast in the BIS method from the first electronic device 300 and may transmit the data to at least one of the seventh electronic device 360 and the eighth electronic device 370. The sixth electronic device 350 may perform an assistant role for relaying data between the first electronic device 300 and other electronic devices 360 and 370.

According to an embodiment, the second electronic device 310 and the third electronic device 320 may be implemented as a pair of wireless earphones worn on the left ear and right ear, respectively, of the user. According to an embodiment, the fourth electronic device 330 and the fifth electronic device 340 may be implemented as a pair of wireless earphones worn on the left ear and the right ear, respectively, of the user. According to an embodiment, the seventh electronic device 360 and the eighth electronic device 370 may be implemented as a pair of wireless earphones worn on the left ear and right ear, respectively, of the user.

The first electronic device 300 may broadcast audio data in a BIS method. According to an embodiment, at least one of the second electronic device 310, the third electronic device 320, the fourth electronic device 330, and the fifth electronic device 340 may receive audio data broadcast from the first electronic device 300. According to an embodiment, at least one of the seventh electronic device 360 and the eighth electronic device 370 may receive audio data broadcast from the first electronic device 300 via the sixth electronic device 350.

The first electronic device 300 may broadcast configuration information (or control information) required for another electronic device to receive audio data. According to an embodiment, at least one of the second electronic device 310 to the eighth electronic device 370 may receive audio data broadcast from the first electronic device 300 based on configuration information (or control information) broadcast from the first electronic device 300. According to an embodiment, when the second electronic device 310 and the third electronic device 320 operate in pair, any one of the second electronic device 310 and the third electronic device 320 may receive audio data based on configuration information (or control information) broadcast from the first electronic device 300.

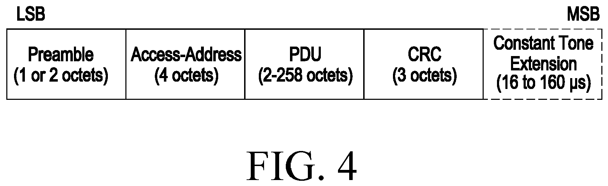

FIG. 4 illustrates a link layer packet format according to an embodiment.

LE Uncoded PHYs LE 1M and LE 2M are defined as a packet format as shown in FIG. 4, and the packet format may be used for the packet of a physical channel. Referring to FIG. 4, a link layer packet format includes four mandatory fields and one optional field. The four mandatory fields are preamble, access address, PDU, and CRC, and the optional field is constant tone extension.

The preamble may include 1 octet when transmitted and received in the LE 1M PHY and 2 octets when transmitted and received in the LE 2M PHY. The access address may include 4 octets, and the PDU may include 2 to 258 octets. The CRC may include 3 octets. The preamble may be transmitted first, and the access address, PDU, CRC, and constant tone extension (if present) may be transmitted sequentially. The entire packet may be transmitted at the same symbol rate (e.g., one of 1 Msym/s or 2 Msym/s modulation). When transmitting a packet (not including constant tone extension), 44 to 2128 µs may be required. When the constant tone extension is present, the constant tone extension duration may be, e.g., 16 to 160 µs.

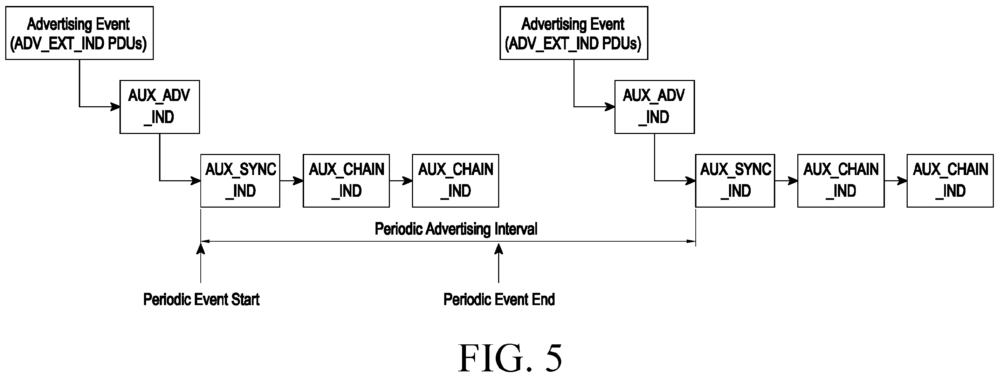

FIG. 5 is a view illustrating an extended advertising (EA) and periodic advertising (PA) event according to an embodiment.

Referring to FIG. 5, when an advertising event (or ADV_EXT_IND PDUs) occurs, the AUX_ADV_IND PDU may be transmitted. When the AUX_ADV_IND PDU is transmitted, a periodic advertising (PA) train including the AUX_SYNC_IND PDU and the AUX_CRAIN_IND PDU may be transmitted. A PA interval for the PA train may be set, and a periodic event start and a periodic event end may be set. The AUX_SYNC_IND PDU and the AUX_CHAIN_IND PDU transmitted from the periodic advertising train PA train should use the access address (AA) value set in the synchronization information field (SyncInfo field) included in the AUX_ADV_IND PDU describing the PA train. The link layer of the isochronous broadcasting state may newly generate a seed access address (SAA) for each BIG. The access address for the BIS(es) to be generated may be derived from the SAA. The access addresses for each BIS and BIG control logical link of the BIG may be derived from the SAA for the corresponding BIG.

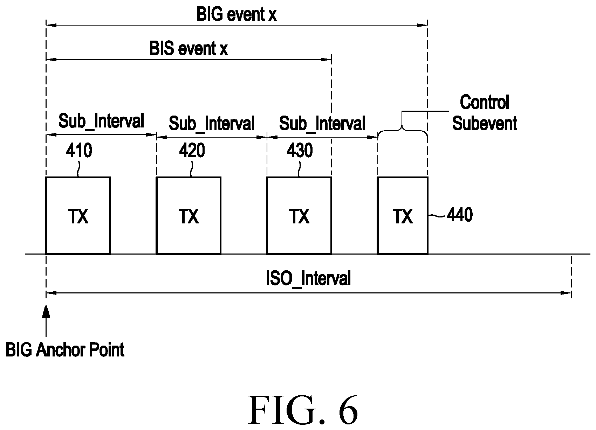

FIG. 6 is a view illustrating a BIG event and a BIS event according to an embodiment. The broadcasting method may be a method in which data is streamed from at least one source (or at least one source electronic device) to a plurality of sinks (or sink electronic devices) using a group of synchronized streams. Each stream used in the broadcast method may be referred to as a broadcast isochronous stream (BIS), and a group of BIS may be referred to as a broadcast isochronous group (BIG).

BIS logical transport may be used to transmit one or more isochronous data streams to all the devices for BIS within a range (e.g., within a predetermined distance). The BIS may include one or more subevents for transmitting isochronous data packets. The BIS may support transmission of multiple isochronous data packets in all the BIS events.

Referring to FIG. 6, the BIG event x may include at least one BIS event x, and specific Isochronous data may be transmitted in the BIS event x. ISO_interval indicates the time between two adjacent BIG anchor points, and sub_interval indicates the time between the starts of two consecutive subevents in each BIS. According to an embodiment, the BIG event x may include at least one BIS event x, and the BIS event x may include at least one subevent.

The BIS event may include one or more BIS PDUs 410, 420, and 430. The link layer may transmit the BIS PDU only in BIG events. The link layer may transmit only the BIS PDU as part of the BIG event. Each BIG event may be divided into BIS events and control subevents divided by Num_BIS.

According to an embodiment, when it is determined that it is necessary to change the channel information, the source electronic device may transmit a control subevent 440 including the changed channel information. According to an embodiment, when it is not necessary to change the channel information, the source electronic device may not transmit the control subevent 440. According to an embodiment, when it is determined that BIG termination is necessary, the source electronic device may transmit the control subevent 440. Each BIS event may be divided into NSE subevents. Each BIS event may start at a moment called a BIS anchor point and end after the last subevent. Each BIG event may start at a moment called a BIG anchor point, end after the control subevent 440 if the control subevent 440 is present, and end at the last BIS event when there is no control subevent 440. The BIG anchor points may be regularly spaced at ISO_interval intervals.

The BIS does not have an acknowledgment protocol, and traffic may be transmitted in one direction from at least one source electronic device which is a broadcasting device. To enhance transmission reliability, isochronous data packets may be retransmitted by increasing the number of subevents in an event.

Multiple BISs in the BIG have a common timing reference and may be temporally synchronized. For example, the left and right channels of the audio stereo stream received by the separate device need to be simultaneously rendered. Multiple BISs in the BIG may be scheduled in a sequential or interleaved arrangement.

In order for the electronic device to receive the BIS, the link layer may need to obtain BIG information (BIGInfo) describing streams. The BIG information BIGInfo may be obtained from additional controller advertising data (ACAD) of periodic advertising.

Each BIG may include the following parameters.
- Num_BIS is the number of BIS in BIG. Each of the BISs in the BIG may be assigned a different BIS_Number from 1 to Num_BIS.
- ISO_Interval is the time (e.g., 1.25 ms) between two adjacent BIG anchor points. For example, the ISO_interval value may be between 4 and 3200. (5ms to 4s)
- BIS_spacing is the time between the start time of the corresponding subevent in adjacent BISs and the start time of the first subevent of the last BIS and the control subevent.
- Sub_Interval is the time between the starts of two consecutive subevents of each BIS.
- Max_PDU is the maximum number of data octets (excluding MIC) capable of transmitting each BIS data PDU in the BIG. For example, the Max_PDU value is between 1 and 251.
- Max_SDU is the maximum size of the service data unit (SDU) of this BIG. For example, the Max_SDU value is between 1 and 4095.
- Max SDU means the maximum size of data that may be transmitted. For example, assuming that the Max SDU is 120 bytes and the ISO interval is 10 ms, the bitrate may be 96 kbps (120 bytes = 960 bit, 96,000 bit/second => 96 kbps).
- The max PDU transmission time (MPT) should be equal to the time taken to transmit the packet containing the BIS data PDU together with the payload of Max_PDU octet in the PHY used for the BIS, and S = 8 is assumed in the LE coded PHY.
- burst number (BN), pre-transmission offset (PTO), and immediate repetition count (IRC) control what data is transmitted in each BIG event. The value of BN should be between 1 and 7. The value of the PTO should be between 0 and 15. The value of the IRC should be between 1 and 15. The IRC may specify the number of groups carrying data related to the corresponding BIS event. The remaining group may carry data related to the BIS event designated by the PTO.
- number of subevents (NSE) is the number of subevents per BIS in each BIG event. This value should be between 1 and 31 and should be an integer multiple of BN.
- Framed indicates whether BIG delivers framed or unframed data.
- Encrypted indicates whether BIG is encrypted.

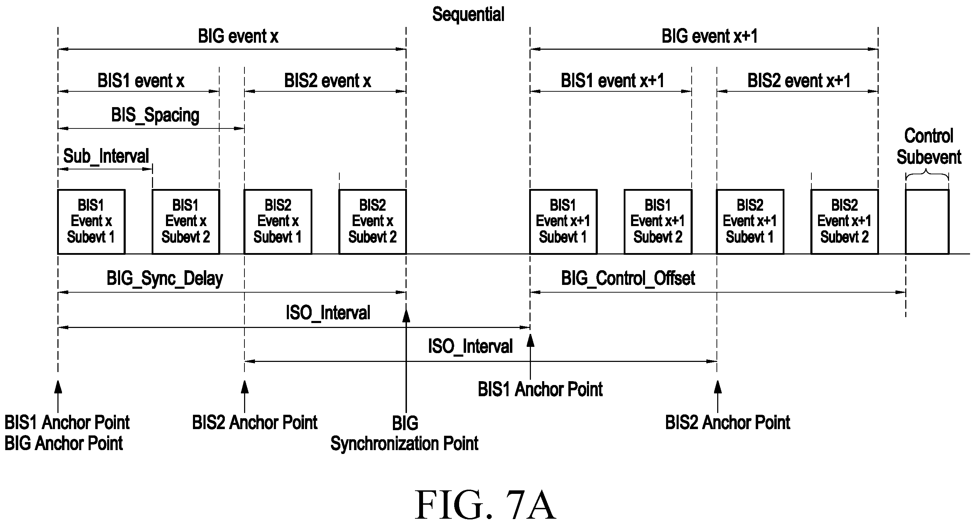

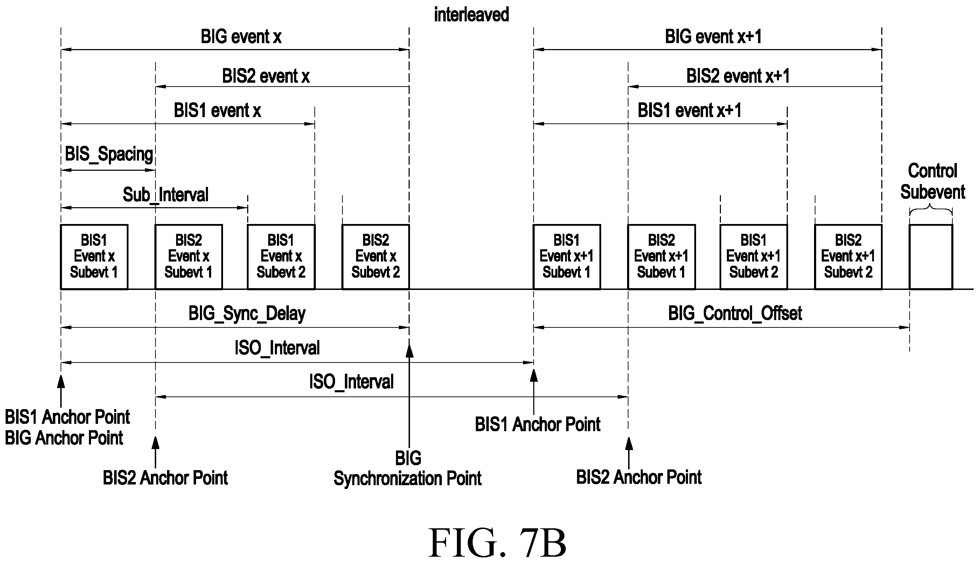

FIG. 7A illustrates an example of BISs having a sequential arrangement according to an embodiment, and FIG. 7B illustrates an example of BISs having an interleaved arrangement according to an embodiment.

The BISs in the BIG may be sequentially or interleavedly arranged by appropriately setting the values of the Sub_Interval and the BIS_Spacing parameter. BIS subevents are occasions where the isochronous broadcaster transmits a broadcaster isochronous BIS PDU and the synchronized receiver receives it.

FIG. 7A shows an example in which BIGs having Num_BIS=2 and NSE=2 are sequentially arranged. The BIG event x may sequentially include the BIS1 event x and the BIS2 event x, the BIS1 event x may include the BIS1 event x Subevt 1 and the BIS1 event x Subevt 2, and the BIS2 event x may include the BIS2 event x Subevt 1 and the BIS2 event x Subevt 2. According to an embodiment, in the case of the sequential arrangement, the BIS_Spacing should be NSE * Sub_Interval or more, and thus all the subevents of the BIS Event may occur together.

FIG. 7B shows an example in which BIGs having Num_BIS=2 and NSE=2 are arranged interleavedly. The BIG event x may interleavedly include the BIS1 event x and the BIS2 event x. BIG event x may include BIS1 Event x Subevt 1, BIS2 Event x Subevt 1, BIS1 Event x Subevt 2, and BIS2 Event x Subevt 2 in chronological order. According to an embodiment, in the case of the interleaved arrangement, the Sub_Interval should be Num_BIS * BIS_Spacing, and the first subevents of all the BISs may be adjacent, and the second subevents of all BISs may be adjacent. In each case, the minimum value for BIS_Spacing may be required to be used.

Referring to FIGS. 7A and 7B, the maximum possible length for the data portion (excluding the control subevent) of the BIG event may be expressed as BIG_Sync_Delay. The value of BIG_Sync_Delay may be the same as the time from the anchor point to BIG Synchronization, which is the end of the packet including payload of Max_PDU octet transmitted in the last subevent.

BIG_Sync_Delay equals (Num_BIS - 1) * BIS_Spacing + (NSE - 1) * Sub_Interval + MPT. The Link Layer should transmit one BIC data PDU at the start time of each subevent of the isochronous broadcasting event, unless scheduling conflicts are present. According to an embodiment, at least one BIS PDU may be transmitted within six consecutive BIS events. If the PDU is not transmitted, the Link Layer may have to do as if all other objectives (packet timing, payload selection) have been completed.

For each BIS event, the data source should supply a data burst composed of burst number (BN) payloads, and each data may be required to have a single fragment or one or more SDU segments. This burst is associated with a corresponding BIS event, but may also be transmitted in an early event. Each PDU including a given payload has the same link layer identifier (LLID) value, but may have a different CSSN and CSTF. For reference, the burst associated with the BIS event may be composed of payloads of bisPayloadCounter between bigEventCounter * BN and (bigEventCounter + 1) * BN - 1.

Subevents of each BIS event may be divided into groups of BN subevents, respectively. Thus, the group count (GC) groups may be GC = NSE / BN.

The intermediate repetition count (IRC) may specify the number of groups currently carrying data related to the BIS event. The remaining groups may carry data related to the BIS event specified by a pre-transmission offset (PTO). IRC should be larger than 0 and not larger than GC. If IRC = GC, PTO should be ignored. Otherwise, the PTO should be larger than zero.

The groups of Subevents are numbered using g from 0 to GC-1 in order.
- If g < IRC, group g should include data related to the current BIS event.
- If g >= IRC, group g should include data related to the future BIS event of the PTO * (g - IRC + 1) BIS event after the current BIS event.

The payload of each burst should always be transmitted in the same order.

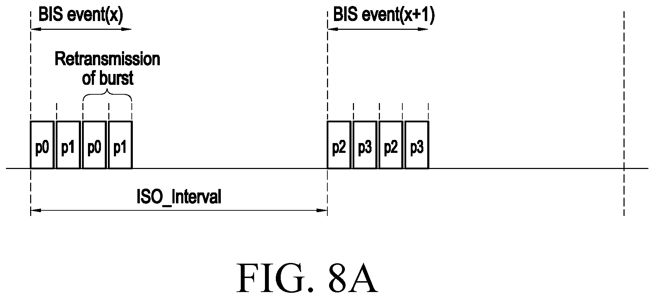

FIGS. 8A to 8C each illustrate an example of payload allocation in a BIS according to an embodiment.

FIG. 8A shows payload allocation in a BIS having characteristics of BN=2, IRC=2, PTO=0, and NSE=4. Since BN=2, payloads p0 and p1 may be transmitted in the BIS event(x), and since IRC=2, payloads p0 and p1 may be transmitted once more in the BIS event(x). Since PTO=0, data related to the BIS event transmitted later in the BIS event(x) may not be transmitted in advance. The BIS event(x) includes payloads p0, p1, p0, and p1 in chronological order, and the repeatedly transmitted p0 and p1 are retransmissions of burst. The BIS event(x+1) includes the payloads p2, p3, p2, and p3 in chronological order, and the repeatedly transmitted p2 and p3 are retransmissions of burst. In FIG. 8A, since PTO = 0, data related to the current BIS event may be repeatedly transmitted in each BIS event, and data related to the BIS event transmitted later may not be transmitted in advance.

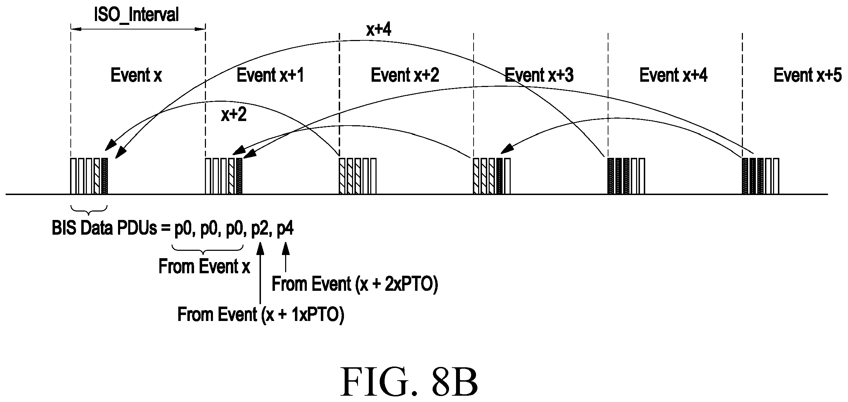

FIG. 8B shows payload allocation in a BIS having characteristics of BN=1, IRC=3, PTO=2, and NSE=5. Since BN=1, payload p0 may be transmitted in the BIS event(x), and since IRC=3, payload p0 may be transmitted three times in the BIS event(x). Since BN=1, PTO=2, IRC=3, and NSE=5, payload p2 related to the BIS event(x+2) and payload p4 related to the BIS event(x+4) may be transmitted in advance in the BIS event(x). BIS event x may include payloads p0, p0, p0, p2, and p4 in chronological order, p0 may be data related to the current BIS event (Event x), p2 may be data related to the BIS event (Event x+2) and transmitted in advance in the BIS event (Event x), and p4 may be data related to the BIS event (Event x+4) and transmitted in advance in the BIS event (Event x). The start time of the BIS event (Event x + 2) may be a time 2 interval ISO_Interval after the start time of the BIS event (Event x). The start time of the BIS event (Event x + +4) may be a time 4 interval ISO_Interval after the start time of the BIS event (Event x).

In the BIS event (x+1), payload p1 may be transmitted three times (retransmission of burst), and in the BIS event (x+1), payload p3 related to the BIS event (x+3) and payload p5 related to the BIS event (x+5) may be transmitted in advance.

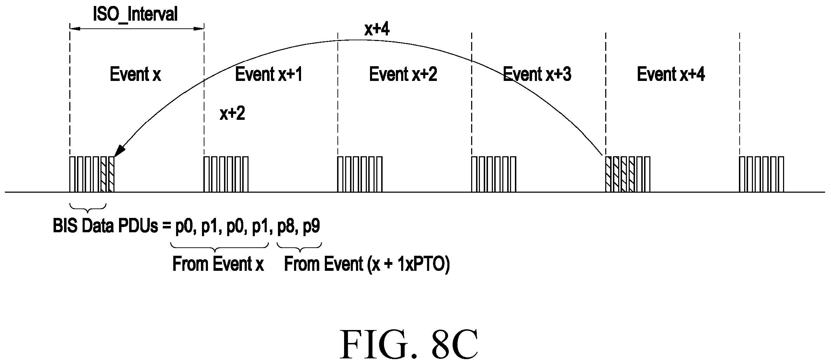

FIG. 8C shows payload allocation in a BIS having characteristics of BN=2, IRC=2, PTO=4, and NSE=6. Since BN=2, payloads p0 and p1 may be transmitted in the BIS event(x), and since IRC=2, payloads p0 and p1 may be transmitted once more in the BIS event(x). Since BN=2, PTO=4, and NSE=6, payloads p8 and p9 related to the BIS event(x+4) may be transmitted in the BIS event(x). BIS event x may include payloads p0, p1, p0, p1, p8, and p9 in chronological order, p0 and p1 may be data related to the current BIS event (Event x) and may be repeatedly transmitted, and p8 and p9 may be data related to the BIS event (Event x + 4).

Meanwhile, the BIS service is a service that transmits BIS audio data for an undesignated number of people, and when a sink electronic device that is synchronized with one BIS source and receives BIS audio data becomes far from the BIS source, Bluetooth communication may be disconnected and BIS audio data transmitted from the BIS source may no longer be received.

In order to solve the problem caused by the distance movement between the source electronic device and the sink electronic device, or to configure a BIS service so that each electronic device operates a unique audio channel, a plurality of source electronic devices may be configured as one BIS source. When performing the BIS service using the plurality of BIS sources, the plurality of BIS source electronic devices may need to synchronize PA and BIS data transmission through synchronization of the clock and the BIG parameters.

The disclosure proposes a method for transmitting BIS data using a plurality of electronic devices, and proposes a method for transmitting BIS data, extended advertising (EA), and/or periodic advertising (PA) by operating the plurality of electronic devices as one BIS source. When a plurality of electronic devices operate like one BIS source and transmit BIS data, EA, and/or PA, a broadcast service may be provided to the plurality of sink electronic devices with stable and high audio quality. According to an embodiment, a plurality of electronic devices may synchronize Bluetooth clocks and BIG parameters, and operate as if one source electronic device transmits BIS data, so that the sink electronic device may receive BIS data from a source electronic device that broadcasts a stronger signal, or may seamlessly receive BIS data through at least one source electronic device positioned nearby when the sink electronic device moves.

In order for the plurality of electronic devices to operate like one BIS source, the plurality of source electronic devices may synchronize their operation times and transmit periodic advertising (PA). According to an embodiment, at least one of the plurality of source electronic devices may transmit a PA in a set time interval (or interval). According to an embodiment, at least one of the plurality of source electronic devices may transmit BIS data at the same time through sharing the same BIG information to be transmitted if necessary.

At least one of the plurality of source electronic devices may synchronize the operation times (e.g., Bluetooth clocks) of the plurality of source electronic devices through direct link generation using BT/BLE, BLE advertising/scan operation, PA and BIS data transmission/reception, and/or communication (e.g., Wi-Fi) through another bearer to synchronize the packet transmission times. At least one of the plurality of source electronic devices may synchronize the interval for PA transmission, the channel map used for the corresponding PA, and the event counter to be used for simultaneous PA transmission.

At least one of the plurality of source electronic devices may synchronize BIG information including BIG parameters, may synchronize sound sources of audio data to be transmitted if necessary, and may transmit BIS audio data as if one source electronic device transmits the same based thereon. The BIG parameters included in the BIG information may be parameters for acting as a BIS source device for the BIG. The device receiving the BIG parameters may apply the parameters for the BIG. That is, the BIG parameters may be used by an electronic device to allow that electronic device to function as a BIS source device for the BIG. At least one of the plurality of source electronic devices may synchronize at least one of broadcast ID, program information, and transmission power (Tx power). According to an embodiment, at least one of the plurality of source electronic devices may intentionally use different transmission power if necessary, or may operate the number of transmissions and/or the transmission interval differently depending on the state of the electronic device.

According to an embodiment, PA transmission information and/or BIG information (BIGInfo) may be configured based on a user input (or user intention) or an operation of a specific application. A first source electronic device may share (or transmit) PA transmission information and/or BIG information (BIGInfo) to a second source electronic device. The first source electronic device may share (or transmit) PA transmission information and/or BIG information with a second electronic device so that the second electronic device may act as a second source electronic device for the BIG. The first source electronic device may transmit the PA based at least partially on the same configuration as the PA transmission information. The first source electronic device may transmit BIS data based on a configuration at least partially identical to the BIG information.

According to an embodiment, the second source electronic device may receive PA transmission information and/or BIG information (BIGInfo) from at least the first source electronic device or an external network. The second source electronic device may transmit the PA based at least partially on the same configuration as the PA transmission information. The second source electronic device may transmit BIS data based on a configuration at least partially identical to the BIG information.

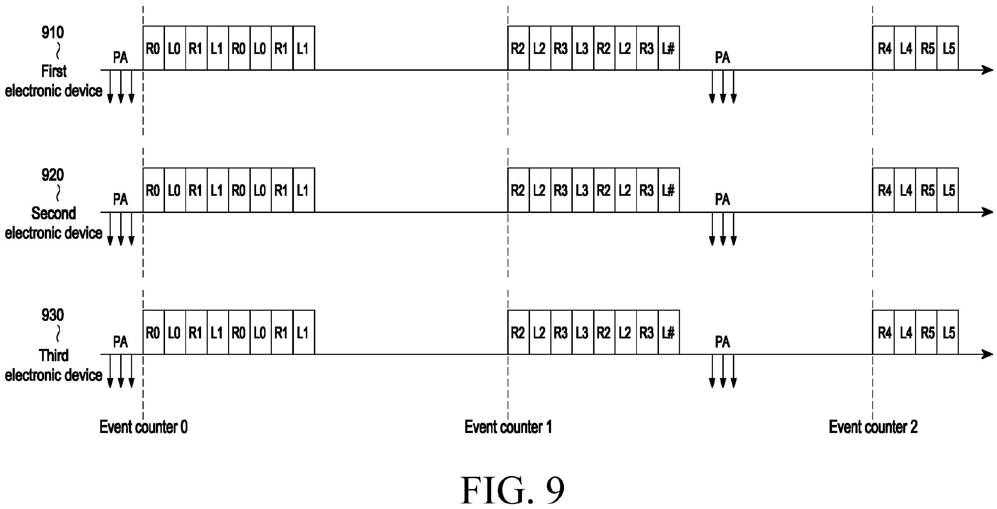

FIG. 9 illustrates an example in which a plurality of electronic devices are synchronized with one BIG to transmit BIS data and PA according to an embodiment.

Referring to FIG. 9, each of the first electronic device 910, the second electronic device 920, and the third electronic device 930 may serve as a BIS source, may transmit a PA at the same set time, and may be synchronized with one BIG based on the same set event counter to transmit BIS data.

Based on the event counter value (e.g., 0, 1, 2), each of the first electronic device 910, the second electronic device 920, and the third electronic device 930 may transmit the same BIS data at the same time. For example, each of the first electronic device 910, the second electronic device 920, and the third electronic device 930 may transmit the same BIS data R0, L0, R1, L1, R0, L0, R1, and L1 from the time when the event counter value is 0. For example, each of the first electronic device 910, the second electronic device 920, and the third electronic device 930 may transmit the same BIS data R2, L2, R3, L3, R2, L2, R3, and L3 from the time when the event counter value is 1.

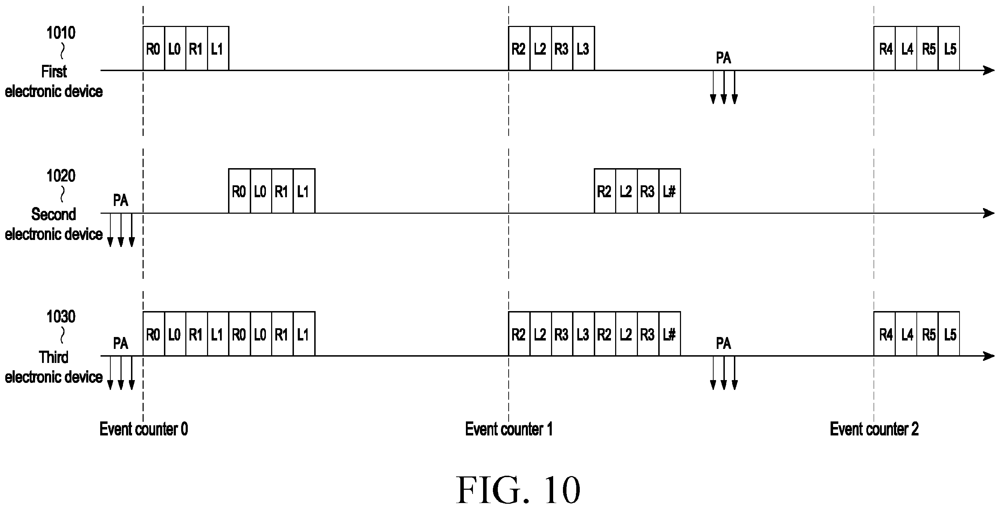

FIG. 10 illustrates an example in which a plurality of electronic devices are synchronized with one BIG and BIS data transmission and PA transmission are set to be different according to an embodiment.

Referring to FIG. 10, each of the first electronic device 1010, the second electronic device 1020, and the third electronic device 1030 may serve as a BIS source, may transmit a PA at each set time, and may transmit BIS data based on an event counter.

The second electronic device 1020 and the third electronic device 1030 may transmit the PA at the same time, and then each of the first electronic device 1010 to the third electronic device 1030 may transmit the whole or part of the BIS data from the time when the event counter value is 0. For example, the first electronic device 1010 may transmit the first BIS data R0, L0, R1, and L1 and the third electronic device 1030 may transmit the second BIS data R0, L0, R1, L1, R0, L0, R1, and L1 from the time when the event counter value is 0. After the first electronic device 1010 completes the transmission of the first BIS data R0, L0, R1, and L1, the second electronic device 1020 may transmit the third BIS data R0, L0, R1, and L1.

In FIG. 10, each of the first electronic device 1010, the second electronic device 1020, and the third electronic device 1030 may transmit PA and/or BIS data based on the same or different set times.

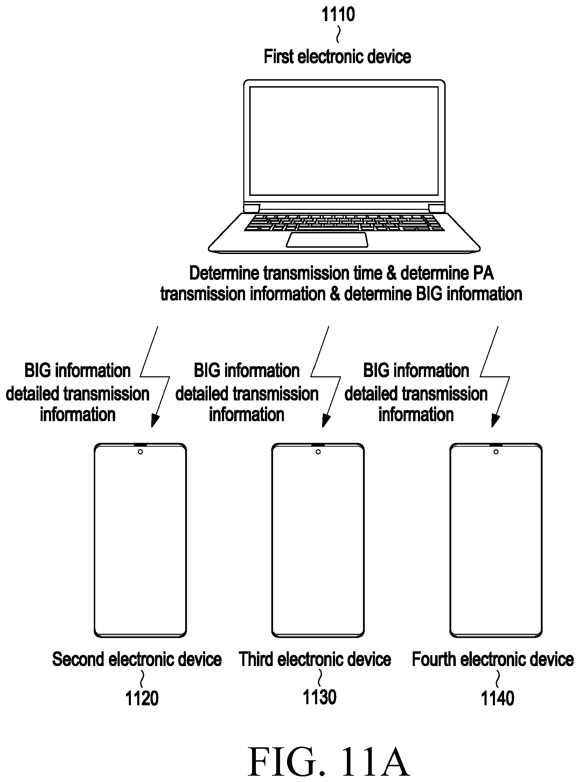

FIG. 11A illustrates an example in which a plurality of electronic devices are synchronized with one BIG through a network according to an embodiment.

Referring to FIG. 11A, the first electronic device 1110 may determine and/or transmit at least one of a transmission time for PA and/or BIS data, PA transmission information, and BIG information. According to an embodiment, the first electronic device 1110 may be implemented as a computer, a server, or a mobile phone, for example. The first electronic device 1110 may transmit at least one of the transmission time of the PA and/or BIS data, the PA transmission information, and the BIG information to each of the second electronic device 1120, the third electronic device 1130, and the fourth electronic device 1140 through the network.

Each of the second electronic device 1120, the third electronic device 1130, and the fourth electronic device 1140 may transmit PA and/or BIS data based on at least one of the transmission time for PA and/or BIS data, PA transmission information, and BIG information.

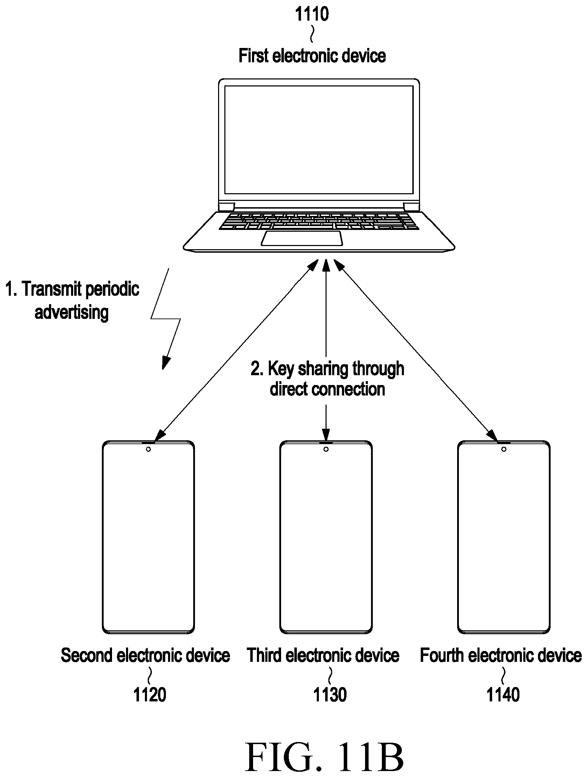

FIG. 11B illustrates an example in which an electronic device shares BIG information through PA transmission and direct connection according to an embodiment.

Referring to FIG. 11B, the first electronic device 1110 may share BIG information with at least one of the second electronic device 1120, the third electronic device 1130, and the fourth electronic device 1140 through the PA. In the case that the BIS transmissions are encrypted, the first electronic device 1110 may share information to enable decryption (e.g. a BIG encryption key or code) with at least one of the second electronic device 1120, the third electronic device 1130, and the fourth electronic device 1140 through respective direct connections.

Apart from determining whether to generate the BIG, the first electronic device 1110 may determine whether to share at least one BIG parameter of the BIG information determined by the first electronic device 1110 with at least one of the second electronic device 1120, the third electronic device 1130, and the fourth electronic device 1140. According to the determination of whether to share the BIG information, the first electronic device 1110 may share the BIG information with at least one of the second electronic device 1120, the third electronic device 1130, or the fourth electronic device 1140 through a direct connection through BT/BLE link generation with the electronic device to receive the BIG information or a communication method through another network such as BLE scanning/advertising, PA transmission, or Wi-Fi. The first electronic device 1110 may share BIG information with at least one of the second electronic device 1120, the third electronic device 1130, and the fourth electronic device 1140 by simultaneously using two or more of the above methods. For example, the first electronic device 1110 may allow another electronic device to obtain BIG information through PA transmission and may share decryption information (e.g. a BIG encryption key or code) with the other electronic device through Wi-Fi communication.

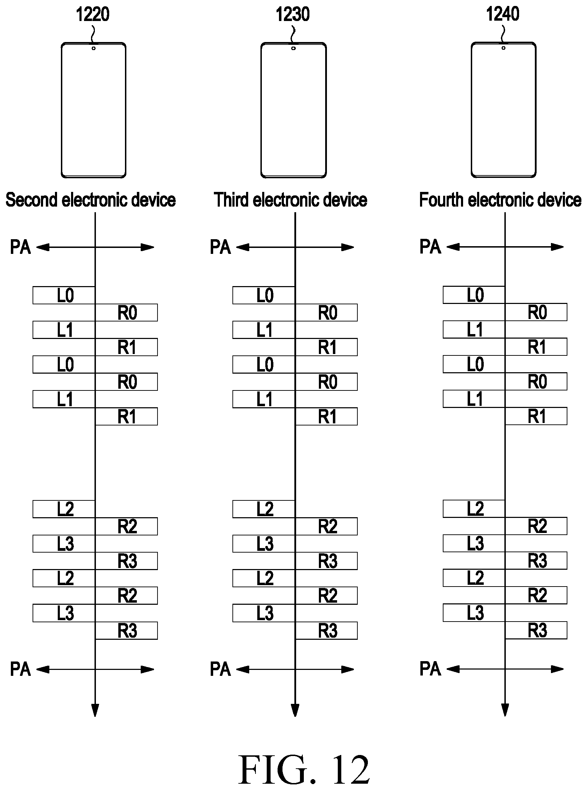

FIG. 12 illustrates an example in which a plurality of electronic devices are synchronized with one BIG through a BIG generation command according to an embodiment. FIG. 9 illustrates an example in which a plurality of electronic devices serving as BIS sources transmit PA and BIS data, and FIG. 12 illustrates an example of operations of electronic devices 1220 to 1240 receiving BIG information among a plurality of electronic devices serving as BIG sources.

Referring to FIG. 12, a first electronic device that serves as a BIS source and generates BIG information may transmit a BIG generation command to a second electronic device 1220, a third electronic device 1230, and a fourth electronic device 1240 that serve as BIS sources and receive BIG information. The BIG generation command may include at least one of transmission time information, PA transmission information, and BIG information for the synchronized PA and/or BIS data.

Each of the second electronic device 1220, the third electronic device 1230, and the fourth electronic device 1240, which serve as BIS sources and receive BIG information, may act as BIS sources for the BIG based on the BIG information. For example, each of the second electronic device 1220, the third electronic device 1230, and the fourth electronic device 1240 may transmit a first PA at a set time based on the BIG generation command, may transmit first BIS data L0, L1, L0, and L1 for a first channel (e.g., a channel for a left earphone) at a set time, and may transmit second BIS data R0, R1, R0, and R1 for a second channel (e.g., a channel for a right earphone) at a set time.

Thereafter, each of the second electronic device 1220, the third electronic device 1230, and the fourth electronic device 1240 may transmit the third BIS data L2, L3, L2, and L3 for the first channel (e.g., the channel for the left earphone) at a set time based on the BIG generation command, and may transmit the fourth BIS data R2, R3, R2, and R3 for the second channel (e.g., the channel for the right earphone) at the set time. Each of the second electronic device 1220, the third electronic device 1230, and the fourth electronic device 1240 may transmit a second PA at a time set based on the BIG generation command.

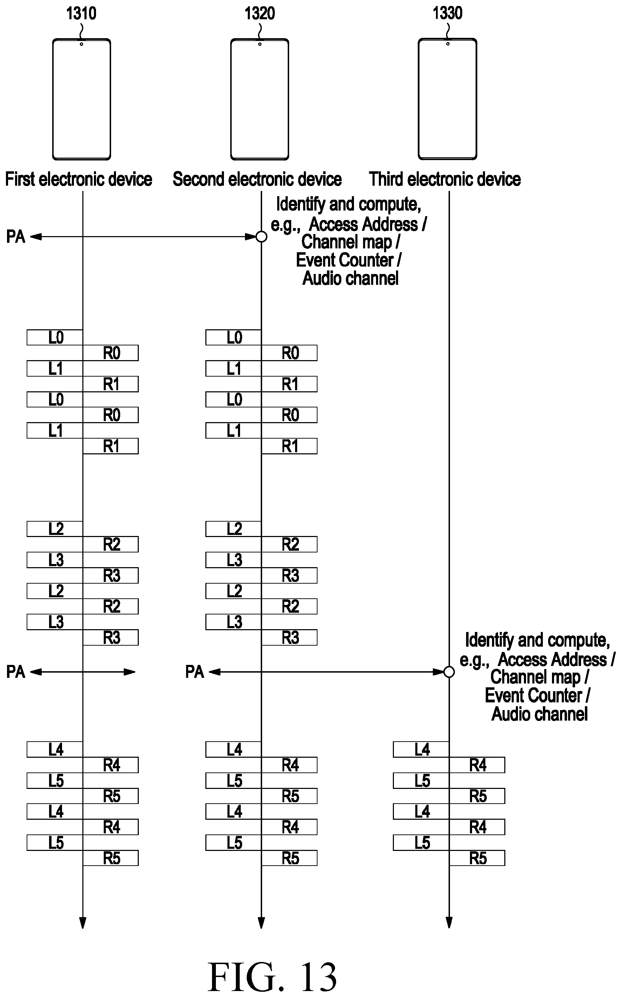

FIG. 13 illustrates an example in which a plurality of electronic devices are synchronized with one BIG through PA according to an embodiment.

Referring to FIG. 13, the second electronic device 1320 receiving the BIG information or the PA transmitted by the first electronic device 1310 generating the BIG information may transmit EA, PA, and/or BIS data with the same BIG attribute as the first electronic device 1310. According to an embodiment, the first electronic device 1310 may generate only BIG information or may transmit only EA or PA after generating BIG information. According to an embodiment, the first electronic device 1310 may transmit only at least some of the information transmitted for the BIS. The third electronic device 1330 receiving the PA transmitted by the second electronic device 1320 receiving the BIG information or the PA from the first electronic device 1310 may transmit EA, PA, and/or BIS data with the same BIG attribute as the first electronic device 1310 and the second electronic device 1320. Upon receiving the BIG information, the second electronic device 1320 may operate to increase the number of electronic devices operating with the same BIG attribute by transmitting the PA.

Referring to FIG. 13, the first electronic device 1310 may transmit a first PA including BIG information, the BIG information including parameters for the BIG (for example at least one of an access address, a channel map, an event counter, and an audio channel). The second electronic device 1320 may receive the PA and may identify and/or compute the parameters in order to act as a source electronic device for the BIG (for example, the second electronic device 1320 may identify and/or compute at least one of the access address, the channel map, the event counter, and the audio channel). Each of the first electronic device 1310 and the second electronic device 1320 may transmit first BIS data L0, L1, L0, and L1 for a first channel (e.g., a channel for a left earphone) based on the first PA at a set time, and may transmit second BIS data R0, R1, R0, and R1 for a second channel (e.g., a channel for a right earphone) at a set time.

Thereafter, each of the first electronic device 1310 and the second electronic device 1320 may transmit the third BIS data L2, L3, L2, and L3 for the first channel (e.g., the channel for the left earphone) based on the first PA at a set time, and may transmit the fourth BIS data R2, R3, R2, and R3 for the second channel (e.g., the channel for the right earphone) at a set time. Each of the first electronic device 1310 and the second electronic device 1320 may transmit the second PA at a time set based on the BIG generation command. The third electronic device 1330 may receive the second PA and may identify and/or compute the parameters based on the second PA in order to act as a source electronic device for the BIG (for example, the third electronic device 1330 may identify and/or compute at least one of the access address, the channel map, the event counter, and the audio channel included in the second PA). Thereafter, the third electronic device 1330 may be synchronized with the first electronic device 1310 and the second electronic device 1320 to transmit PA and/or BIS data L4, R4, L5, L4, R4, L5, and R5.

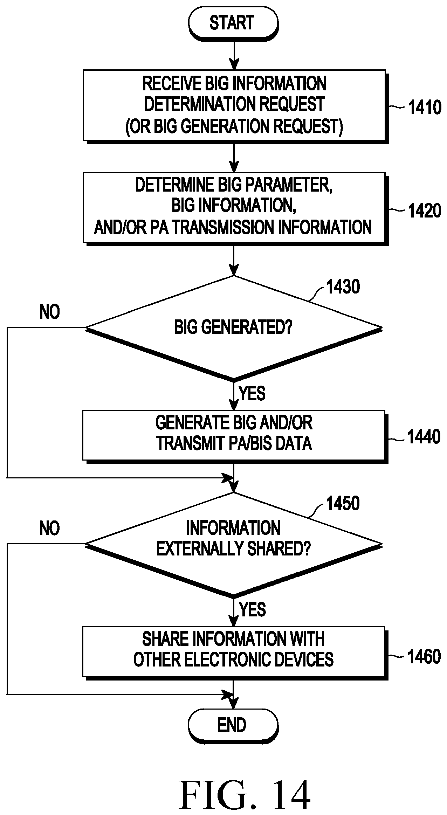

FIG. 14 is a flowchart illustrating an operation method of a first electronic device operating as a BIS source host according to an embodiment.

Referring to FIG. 14, in operation 1410, a first electronic device operating as a BIS source host may identify and/or receive a determination request (or a BIG generation request) for PA transmission information and/or BIG information, based on a user input (which may be variously configured according to the device type of the first electronic device), execution of a specific application, and/or a request of an external electronic device having a communication link established with the first electronic device.

According to an embodiment, when the first electronic device is of a device type having only a touch input without a display, such as a buds-type electronic device, the specific touch input may be a determination request for PA transmission information and BIG information (or a BIG generation request). That is, the determination request may be identified based on a specific touch input. According to an embodiment, when the first electronic device is of a host device type such as a server, computer, or mobile device instructing external electronic devices to perform a BIS service, at least one input among a keyboard, a voice input, a touch input, and execution of a specific application of the first electronic device may be identified as a determination request for PA transmission information and BIG information (or a BIG generation request).

In operation 1420, the first electronic device may determine BIG parameters for acting as a BIS source device in the BIG. For example, the parameters may include at least one of whether the BIS data is encrypted, an encryption key according to whether the BIS data is encrypted, a physical link type, an access address, a channel map, and a framing mode. The first electronic device may determine BIG information and/or PA transmission information necessary for BIS data transmission, such as information about a data transmission time and an interval, transmission power (Tx power), and a PA interval.

In operation 1430, the first electronic device may determine whether to directly generate the BIG. When the first electronic device determines to directly generate the BIG (Yes in 1430), in operation 1440, the first electronic device may generate the BIG and may transmit PA and BIS data based on the generated BIG. In operation 1450, the first electronic device may determine whether to share the PA transmission information and/or the BIG information with the external electronic device. When the first electronic device determines to share the PA transmission information and/or the BIG information with at least one external electronic device in operation 1450 (Yes in operation 1450), in operation 1460 the first electronic device may share the PA transmission information and/or the BIG information with the at least one external electronic device. The PA transmission information and/or the BIG information may be shared by broadcasting, or may be transmitted to at least one specific external electronic device. The PA transmission information and/or the BIG information may be shared with the at least one external electronic device through at least one of networks such as BLE scanning/advertising, PA transmission/reception, and Wi-Fi.

When the first electronic device determines not to directly generate the BIG (No in operation 1430), in operation 1450, the first electronic device may determine whether to share the PA transmission information and/or the BIG information with the at least one external electronic device. According to an embodiment, when the first electronic device is implemented as a server, the first electronic device may determine BIG information but may not generate BIG information. When the first electronic device determines not to share the PA transmission information and/or the BIG information with the external electronic device (No in 1450), the first electronic device may terminate the BIS-related operation.

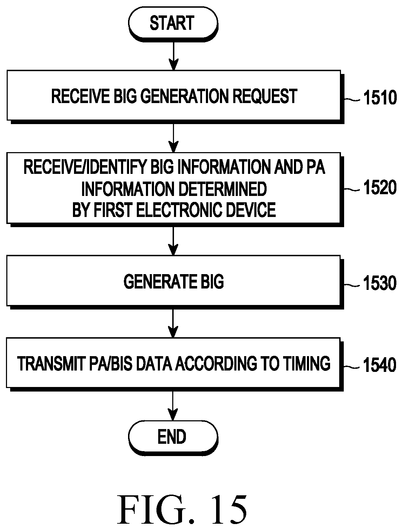

FIG. 15 is a flowchart illustrating an operation method of a second electronic device operating as a BIS source according to an embodiment.

Referring to FIG. 15, in operation 1510, the second electronic device operating as a BIS source may identify and/or receive a determination request for PA transmission information and BIG information (or a BIG generation request), based on a user input (which may be variously configured according to the device type of the second electronic device), execution of a specific application, and/or a request of an external electronic device having a communication link with the second electronic device. According to an embodiment, the second electronic device may omit operation 1510 and may perform operation 1520.

In operation 1520, the second electronic device may receive and/or identify the BIG information and/or PA transmission information determined by the first electronic device. The BIG information may include parameters for the BIG (for example, at least one of whether to encrypt the BIS data, the encryption key depending on whether to encrypt, the physical link type, the access address, the channel map, the framing mode, the data transmission time and interval information, and the transmission power (Tx power)). The PA information may include at least one of information about the PA transmission time and interval, the transmission power (Tx power), and PA interval. According to an embodiment, the second electronic device may receive PA transmission information and/or BIG information from the first electronic device through at least one of networks such as BLE scanning/advertising, PA transmission/reception, and Wi-Fi.

In operation 1530, the second electronic device may generate the BIG (i.e. act as a source device for the BIG) based on the BIG information and/or the PA transmission information received from the first electronic device. In operation 1540, the second electronic device may transmit all or some of the EA, PA, and/or BIS data according to the transmission timing specified by the first electronic device or when transmission is being performed by the first electronic device.

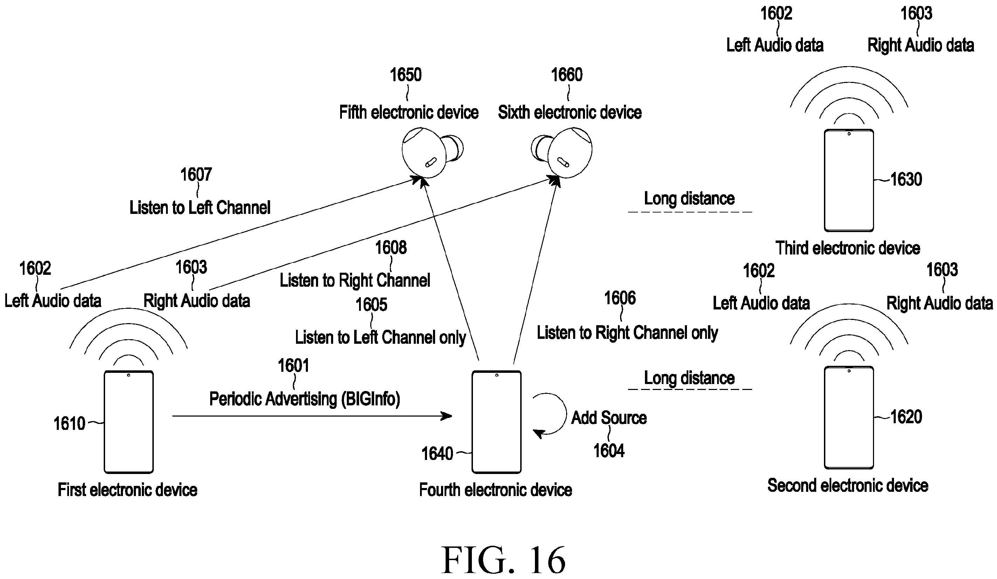

FIG. 16 illustrates an example for describing operations of a BIG including a plurality of electronic devices according to an embodiment.

Referring to FIG. 16, in operation 1601, the first electronic device 1610 may transmit periodic advertising (PA) including BIG information. In operation 1602, the first electronic device 1610 may transmit first BIS data through a first channel based on the BIG information. In operation 1603, the first electronic device 1610 may transmit second BIS data through a second channel based on the BIG information. In operation 1601, the fourth electronic device 1640 may receive a PA including BIG information from the first electronic device 1610. In operation 1604, the fourth electronic device 1640 may add at least one electronic device to operate as a BIS source, based on the BIG information. According to an embodiment, the fourth electronic device 1640 may add the second electronic device 1620 and the third electronic device 1630 as BIS sources based on the BIG information. Thereafter, each of the second electronic device 1620 and the third electronic device 1630 may transmit first BIS data through a first channel in operation 1602 based on the BIG information. For example, the second electronic device 1620 and the third electronic device 1630 may be synchronized with the first electronic device 1610 to transmit first BIS data (left audio data). Each of the second electronic device 1620 and the third electronic device 1630 may transmit second BIS data (right audio data) through a second channel (right channel) in operation 1603 based on the BIG information. For example, the second electronic device 1620 and the third electronic device 1630 may be synchronized with the first electronic device 1610 to transmit second BIS data (right audio data).

In operation 1605, the fourth electronic device 1640 may control and/or command the fifth electronic device 1650 to receive BIS data through only the first channel based on the BIG information. In operation 1606, the fourth electronic device 1640 may control and/or command the sixth electronic device 1660 to receive BIS data through only the second channel, based on the BIG information. According to an embodiment, when the fourth electronic device 1640 is connected to the fifth electronic device 1650 and the sixth electronic device 1660 as BIS assistant electronic devices, the fourth electronic device 1640 may obtain preferred channel information from the fifth electronic device 1650 and the sixth electronic device 1660. According to an embodiment, the fifth electronic device 1650 and the sixth electronic device 1660 may be controlled by the fourth electronic device 1640 and may be implemented in pair of audio devices (e.g., earphones). In operation 1607, the fifth electronic device 1650 may receive first BIS data (left audio data) transmitted from the first electronic device 1610 through the first channel. In operation 1608, the sixth electronic device 1660 may receive second BIS data (right audio data) transmitted from the first electronic device 1610 through the second channel. As described above, the fifth electronic device 1650 and sixth electronic device 1660 initially connected to and controlled by the fourth electronic device 1640 may be controlled to receive BIS data from the first electronic device 1610 after the fourth electronic device 1640 receives the BIG information from the first electronic device 1610.

According to an embodiment, when the fifth electronic device 1650 and the sixth electronic device 1660 move away from the first electronic device 1610 by a threshold distance or more, the fifth electronic device 1650 and the sixth electronic device 1660 may receive BIS data from the second electronic device 1620 and/or the third electronic device 1630 which are other BIS sources. According to an embodiment, the fifth electronic device 1650 and the sixth electronic device 1660 may seamlessly receive BIS data from the second electronic device 1620 and/or the third electronic device 1630 according to the BIG information. According to an embodiment, the second electronic device 1620 and/or the third electronic device 1630 may have the same sound source or may continuously receive the same sound source through a network in order to synchronize the SDU with the first electronic device 1610.

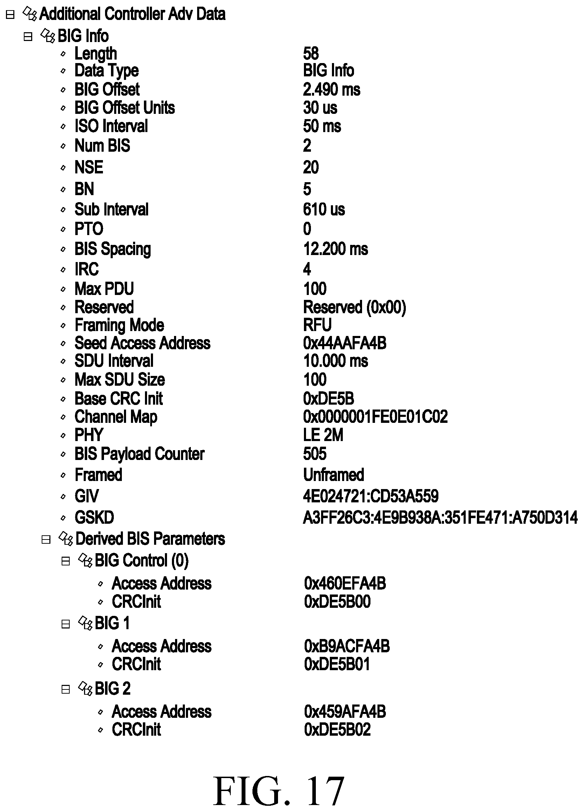

FIG. 17 illustrates an example of BIG information according to an embodiment.

Referring to FIG. 17, a first electronic device operating as a BIS source host may determine BIG information. According to an embodiment, the BIG information may include parameters for the BIG (for example, at least one of a length of information, a data type indicating that the information is BIG information, a BIG offset, a BIG offset unit, an ISO interval, a NUM BIS, an NSE, a BN, a sub interval, a PTO, a BIS spacing, an IRC, a Max PDU, a framing mode, a seed access address, a SDU interval, a Max SDU size, or a channel map). The BIG information determined by the first electronic device operating as the BIS source host may be set to be the same for all electronic devices in the BIG group or to be the same for only some electronic devices, based on at least one of the BIS service type and the type, number, and location information about the electronic device on which the BIS service is to be performed.

According to an embodiment, when the first electronic device performs various BIS service types such as a media type and a conversational type, the first electronic device may perform the BIS service based on predefined BIG parameters. For example, the first electronic device may perform a first BIS service type based on a first set of predefined BIG parameters and may perform a second BIS service type based on a second (different) set of predefined BIG parameters. According to an embodiment, differential transmission power of each source electronic device for the BIG may be set to minimize interference considering the locations of each source electronic device. According to an embodiment, when the first electronic device does not perform the BIS service and the second electronic device, the third electronic device, and/or the fourth electronic device performs various BIS service types such as a media type and a conversational type, differential transmission power of each electronic device may be set to minimize interference considering the locations of the second electronic device, the third electronic device, and/or the fourth electronic device. According to an embodiment, each source electronic device may be configured to have one BIG but a different transmission occasion considering current consumption and utility of each electronic device. According to an embodiment, when the first electronic device does not perform the BIS service and the second electronic device, the third electronic device, and/or the fourth electronic device performs various BIS service types such as a media type and a conversational type, each electronic device may be configured to have one BIG but a different transmission occasion considering current consumption and utility of each electronic device. According to an embodiment, when the second electronic device, the third electronic device, and/or the fourth electronic device operate as one BIG but have different transmission capabilities, each electronic device may operate with different transmission settings.

According to an embodiment, although the second electronic device, the third electronic device, and/or the fourth electronic device transmit BIS data based on some of the same parameters (e.g. access address, channel map, encryption key, and timing), detailed BIS data transmission settings such as the number of transmissions and whether to use the PTO may be configured differently. Here, even if there is a difference in detailed BIS data transmission settings, the finally transmitted PA information may include information capable of encompassing all BIS data transmissions.

According to an embodiment, when the first electronic device identifies and/or receives the determination request for the BIG information, the first electronic device may consider various pieces of information such as the type, number, location information, and provided language of the electronic device where the BIS service is to be performed.

According to an embodiment, the first electronic device may determine at least one piece of information among BIG parameters including whether encryption is applied in the corresponding BIG, the encryption key according to encryption, the physical link type to be used, the type and number of audio channels, the access address to be used for each audio channel, the initial channel map, the channel map update method, the framing mode, and detailed transmission information, the PA interval, the PA and BIS data transmission timing, the broadcast ID (Broadcast_ID), the program information (program_Info), the sound source and language of the BIS audio, the transmission power (Tx power), the transmission power control method, and the PA transmission information.

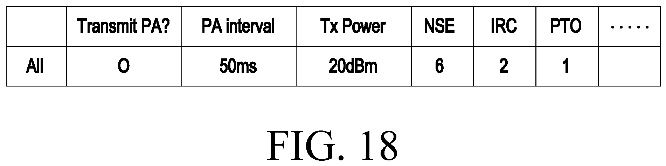

FIG. 18 illustrates an example of BIG information set by an electronic device according to an embodiment.

Referring to FIG. 18, a first electronic device operating as a BIS source host may set the BIG information so that the same BIG parameters are applied to all electronic devices (e.g. all of a second electronic device, a third electronic device, and a fourth electronic device) belonging to the BIG. The first electronic device may configure the electronic devices (e.g. second electronic device, the third electronic device, and the fourth electronic device) to transmit the PA, may set the PA interval to, e.g., 50 ms, may set the transmission power to, e.g., 20 dBm, and may set an NSE value (e.g., 6), an IRC value (e.g., 2), and a PTO value (e.g., 1). The electronic devices (e.g. second electronic device, the third electronic device, and the fourth electronic device) may transmit PA and BIS data at the same transmission timing.

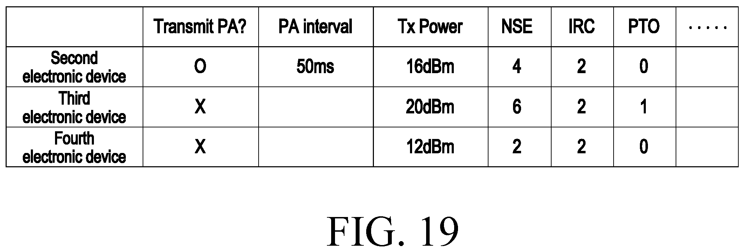

FIG. 19 illustrates an example of BIG information set by an electronic device according to an embodiment.

Referring to FIG. 19, a first electronic device operating as a BIS source host may set BIG information so that different BIG parameters are applied to different electronic devices (e.g. to each of a second electronic device, a third electronic device, and a fourth electronic device) belonging to the same BIG. For example, the first electronic device may configure the second electronic device to transmit the PA, may set the PA interval to, e.g., 50 ms, may set the transmission power to, e.g., 16 dBm, and may set an NSE value (e.g., 4), an IRC value (e.g., 2), and a PTO value (e.g., 0). The first electronic device may configure the third electronic device not to transmit the PA, may set the transmission power to, e.g., 20 dBm, and may set an NSE value (e.g., 6), an IRC value (e.g., 2), and a PTO value (e.g., 1). The first electronic device may configure the fourth electronic device not to transmit the PA, may set the transmission power to, e.g., 12 dBm, and may set an NSE value (e.g., 2), an IRC value (e.g., 2), and a PTO value (e.g., 0).

According to an embodiment, the first electronic device operating as the BIS source host may directly generate the BIG as needed. The first electronic device may transmit BIS data based on the generated BIG, or may transmit only an empty PDU for the purpose of leading to synchronization of timing information and BIG information for other electronic devices. This may be used when more precise transmission timing (Tx timing) coordination is required than transmission timing (Tx timing) synchronization through a network, or when the user may directly control a plurality of electronic devices at a close distance.

For example, when the other electronic devices (e.g. the second electronic device, the third electronic device, and the fourth electronic device) need to operate based on the same transmission timing as the first electronic device and direct connection with the first electronic device through BT/BLE link generation is difficult, the first electronic device may directly generate a BIG using the determined BIG information and transmit PA and BIS data, thereby leading to fast and accurate BIG synchronization with the other electronic devices (e.g. second electronic device, the third electronic device, and the fourth electronic device). According to an embodiment, the first electronic device may transmit only the PA but may not directly transmit the BIS data.

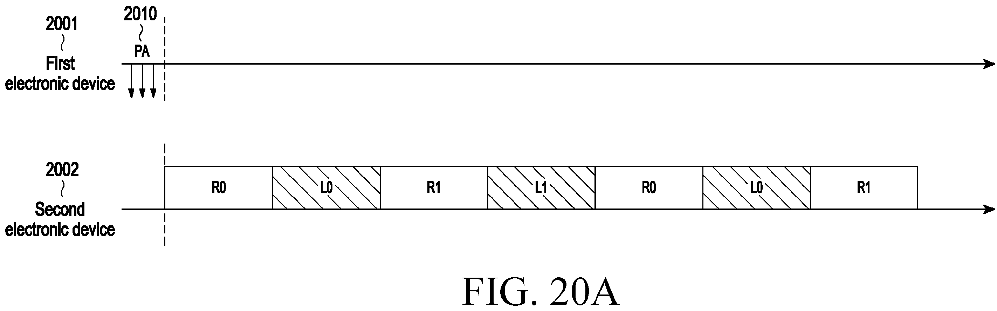

FIGS. 20A to 20D illustrate examples in which an electronic device generates a BIG and transmits the whole or part of PA and/or BIS data. FIGS. 20A to 20D are exemplary for convenience of description, and the disclosure is not limited thereto, and the examples of FIGS. 20A to 20D may be implemented in various combinations. FIGS. 20A to 20D are exemplary for convenience of description, and the electronic device may generate a BIG and transmit the whole or part of PA and/or BIS data in various forms.

FIG. 20A illustrates an example in which an electronic device generates a BIG and transmits only a PA according to an embodiment. Referring to FIG. 20A, the first electronic device 2001 may generate a BIG, may transmit only the PA 2010, and may not transmit BIS data. The second electronic device 2002 belonging to the same BIG may transmit the first BIS data RO,R1,RO,R1 for the first channel and the second BIS data L0,L1,L0 for the second channel based on the BIG information generated by the first electronic device 2001.

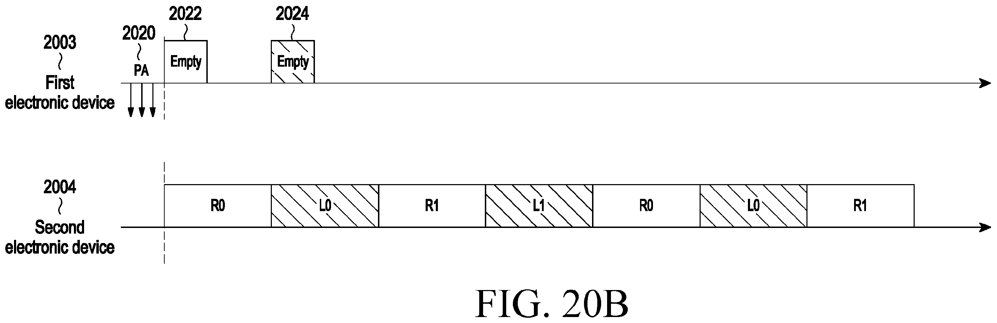

FIG. 20B illustrates an example in which an electronic device generates a BIG and transmits a PA and an empty PDU according to an embodiment. Referring to FIG. 20B, the first electronic device 2003 may generate a BIG, may transmit a PA 2020, and may transmit empty PDUs 2022 and 2024 in some time intervals. The second electronic device 2004 belonging to the same BIG may transmit the first BIS data RO,R1,RO,R1 for the first channel and the second BIS data L0,L1,L0 for the second channel based on the BIG information generated by the first electronic device 2101.

According to an embodiment, the first electronic device 2003 may transmit an empty PDU to the second electronic device 2004, and the second electronic device 2004 may compute an accurate transmission timing based on the empty PDU. According to an embodiment, the second electronic device 2004 may receive the BIG information determined by the first electronic device 2003 and generate the BIG based on the BIG information by various methods such as the user's intention according to various inputs suitable for the device type of the second electronic device 2004, execution of a specific application related to the BIS service, or a request from an external electronic device having a communication link with the second electronic device 2004. The second electronic device 2004 may receive or identify the BIG information determined by the first electronic device 2003 through various methods such as a direct connection through BT/BLE link generation with the first electronic device 2003 or another electronic device, or a communication method through another network such as BLE scanning/advertising, PA transmission, or Wi-Fi.

According to an embodiment, the second electronic device 2004 may receive the PA of the first electronic device 2003, may receive the BIS data transmitted from the first electronic device 2003, and may receive and/or identify BIG detailed information including the BIS data transmission timing of the first electronic device 2501. According to an embodiment, the second electronic device 2004 may receive and/or identify BIG information including BIS data transmission timing through the communication link established with the first electronic device 2003. According to an embodiment, the second electronic device 2004 may receive and/or identify only at least one piece of information related to the BIG information determined by the first electronic device 2003, such as Broadcast_ID, Access Address, or Program info, rather than all pieces of BIG information capable of synchronizing timing and use channels using the BIG information determined by the first electronic device 2003. According to an embodiment, the second electronic device 2004 may receive detailed transmission information defined by the first electronic device 2003 from the first electronic device 2003, in addition to PA reception and BIS data reception. The detailed transmission information may include whether PA is transmitted, the number of intervals or skips during PA transmission, Tx power, NSE/IRC/PTO information, and/or used language information.

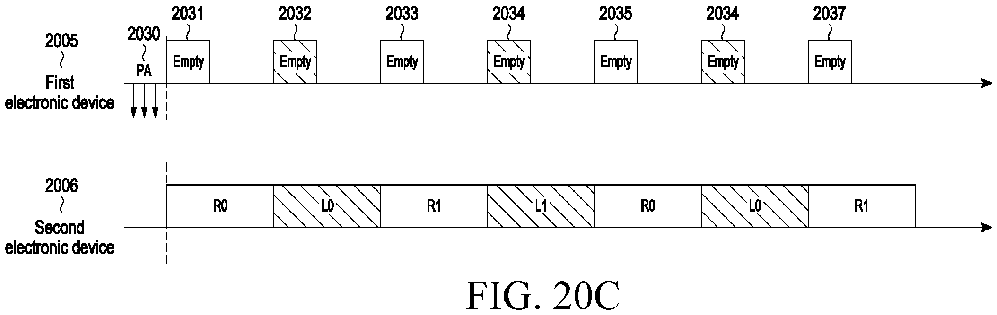

FIG. 20C illustrates an example in which an electronic device generates a BIG and transmits a PA and an empty PDU according to an embodiment. Referring to FIG. 20C, the first electronic device 2005 may generate a BIG, may transmit a PA 2030, and may periodically transmit empty PDUs 2031 to 2037. The second electronic device 2006 belonging to the same BIG may transmit the first BIS data RO,R1,RO,R1 for the first channel and the second BIS data L0,L1,L0 for the second channel based on the BIG information generated by the first electronic device 2005.

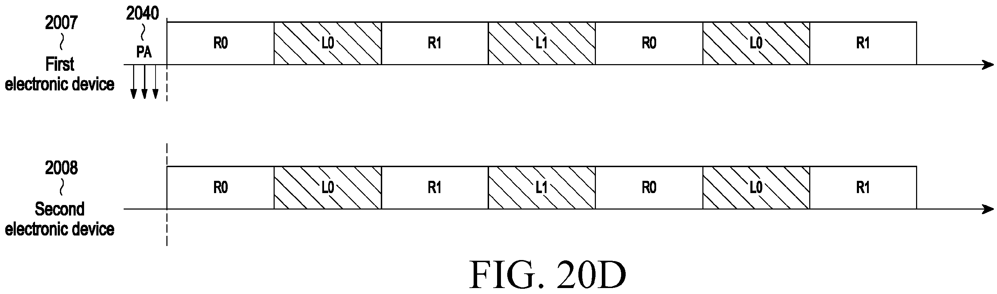

FIG. 20D illustrates an example in which an electronic device generates a BIG and transmits PA and BIS data according to an embodiment. Referring to FIG. 20D, the first electronic device 2007 may generate a BIG and may transmit the PA 2040, the first BIS data RO, R1, RO, and R1 for the first channel, and the second BIS data L0, L1, and L0 for the second channel. The second electronic device 2008 belonging to the same BIG may transmit the first BIS data RO,R1,RO,R1 for the same first channel and the second BIS data L0,L1,L0 for the second channel at the same timing as the first electronic device 2007, based on the BIG information generated by the first electronic device 2007.

The plurality of BIS source devices that generate a BIG and transmit BIS data may synchronize PDU transmission timings and RF channels to operate as if one BIS source device generates one BIG and performs a BIS service. However, this is a method for generating one BIG through PDU transmission synchronization, and it may not be guaranteed that data (or audio data) included in the actual payload transmitted from the electronic devices is the same data (or audio data). To address the issue, the plurality of BIS source devices may request even the SDU which matches the transmitted PDU to be synchronized and operated or may use predetermined methods if necessary. According to an embodiment, when determining the BIG information, the electronic device may define information about the SDU matching the PDU to be transmitted later. According to an embodiment, it may be determined that the same audio data is to be used between the plurality of electronic devices, and the sequence number of the SDU to be transmitted according to the payload counter of the PDU may be synchronized with respect to the determined audio data. Exactly accurate SDU synchronization may be required according to the BIS service scenario, such as when handover between BIS source devices needs to be considered.

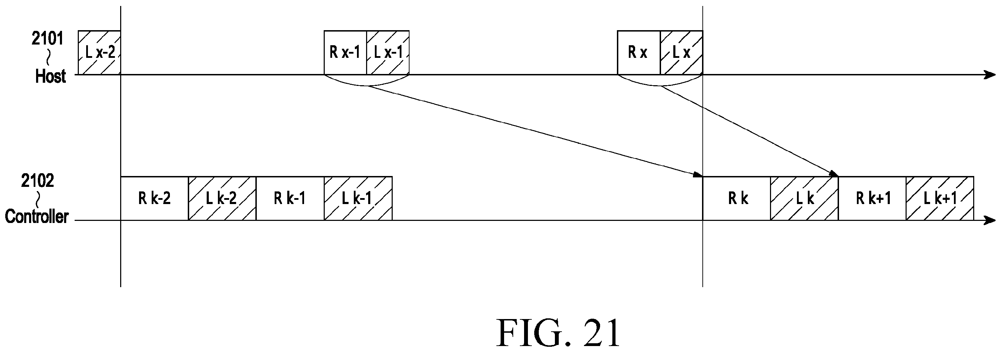

FIG. 21 illustrates an example of an operation of transferring an SDU corresponding to a PDU inside an electronic device according to an embodiment.

Referring to FIG. 21, a host 2101 in an electronic device may be implemented as an application processor (AP), and a controller 2102 in the electronic device may be implemented as a communication processor or a Bluetooth (BT) communication circuit. The host 2101 in the electronic device may transfer a first SDU Rx-1 and Lx-1 to the controller 2102 in the same electronic device, and the controller 2102 in the electronic device may control to allow a first PDU Rk and Lk corresponding to the first SDU Rx-1 and Lx-1 to be transmitted. The host 2101 in the electronic device may transmit a second SDU Rx and Lx to the controller 2102 in the same electronic device, and the controller 2102 in the electronic device may control to allow a second PDU Rk+1 and Lk+1 corresponding to the second SDU Rx and Lx to be transmitted. According to an embodiment, while the PDU transmission timing is already synchronized, the transmission timing from the host 2101 of the BIS data to the controller 2102 may be synchronized so that SDUs of the same order may be included at the PDU transmission timing.

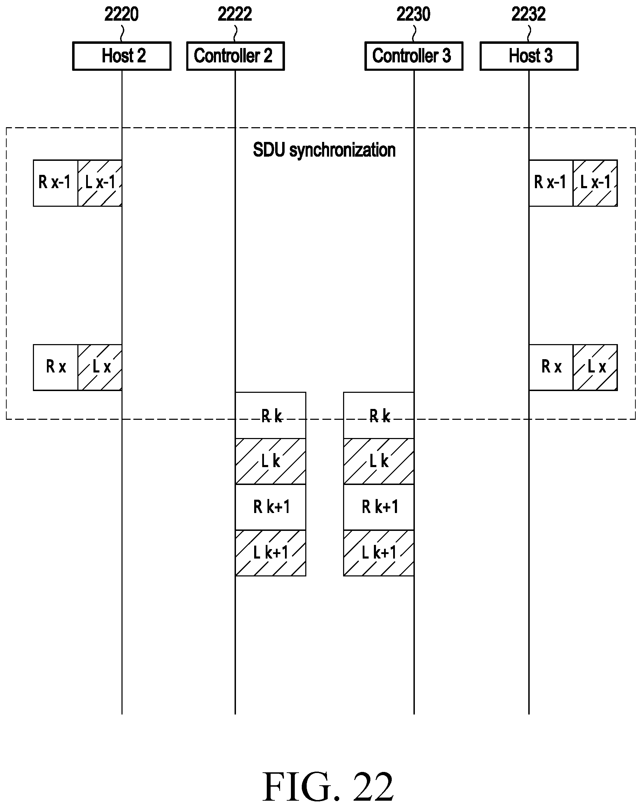

FIG. 22 illustrates an example of an operation for transmitting the same SDU to the same PDU between electronic devices according to an embodiment.

The second electronic device may receive BIG information transmitted from the first electronic device. The BIG information may include at least some of transmission time information for BIS data, transmission power (Tx power) for the BIS data, transmission time information for the PA, and transmission power for the PA, information about whether to encrypt the BIS data, the physical link type, the access address, the channel map, and the framing mode. According to an embodiment, the second electronic device may configure synchronization with the first electronic device based on transmission time information for BIS data included in the BIG information and/or transmission time information for the PA.

Referring to FIG. 22, a second host 2220 in the second electronic device may be implemented as an application processor (AP), and a second controller 2222 in the second electronic device may be implemented as a communication processor or a Bluetooth (BT) communication circuit. A third host 2232 in the third electronic device may be implemented as an application processor (AP), and a third controller 2230 in the third electronic device may be implemented as a communication processor or a Bluetooth (BT) communication circuit.

The SDU transferred inside each electronic device may be synchronized so that the second electronic device and the third electronic device transmit the same PDU. The second host 2220 in the second electronic device may transmit the first SDU Rx-1 and Lx-1 to the second controller 2222 in the second electronic device, and the second controller 2222 in the second electronic device may control to allow the first PDU Rk and Lk corresponding to the first SDU Rx-1 and Lx-1 to be transmitted. At the same time, the third host 2232 in the third electronic device may transmit the first SDU Rx-1 and Lx-1 to the third controller 2230 in the third electronic device, and the third controller 2230 in the third electronic device may control to allow the first PDU Rk and Lk corresponding to the first SDU Rx-1 and Lx-1 to be transmitted.

The second host 2220 in the second electronic device may transmit the second SDU Rx and Lx to the second controller 2222 in the same second electronic device, and the second controller 2222 in the second electronic device may control to allow the second PDU Rk+1 and Lk+1 corresponding to the second SDU Rx and Lx to be transmitted. At the same timing, the third host 2232 in the third electronic device may transmit the second SDU Rx and Lx to the third controller 2230 in the third electronic device, and the third controller 2230 in the third electronic device may control to allow the second PDU Rx+1 and Lx+1 corresponding to the second SDU Rx and Lx to be transmitted.

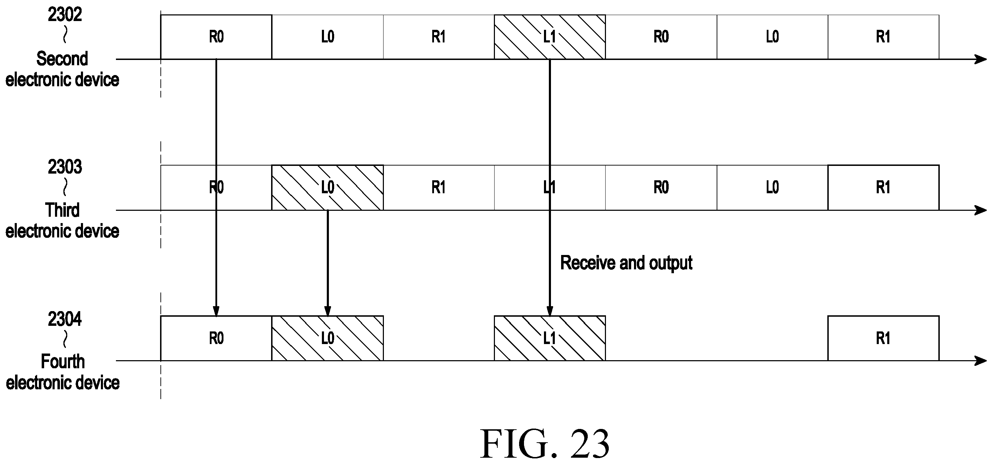

FIG. 23 illustrates an example of an operation in which an electronic device having an output function receives and processes BIS data according to an embodiment.

FIG. 23 illustrates an external electronic device (or a fourth electronic device 2304) that processes stereo, and illustrates that an external electronic device such as of a speaker type may output normally received BIS data among BIS data simultaneously transmitted by a plurality of BIS sources. Referring to FIG. 23, the fourth electronic device 2304 may receive the BIS data R0 and the BIS data L1 from the second electronic device 2302, and may receive the BIS data L0 from the third electronic device 2303. The fourth electronic device 2304 may receive PA information received by another electronic device or may receive the PA transmitted by the electronic devices through a direct scan to obtain BIG information, and may receive and/or output BIS data based on the obtained BIG information.

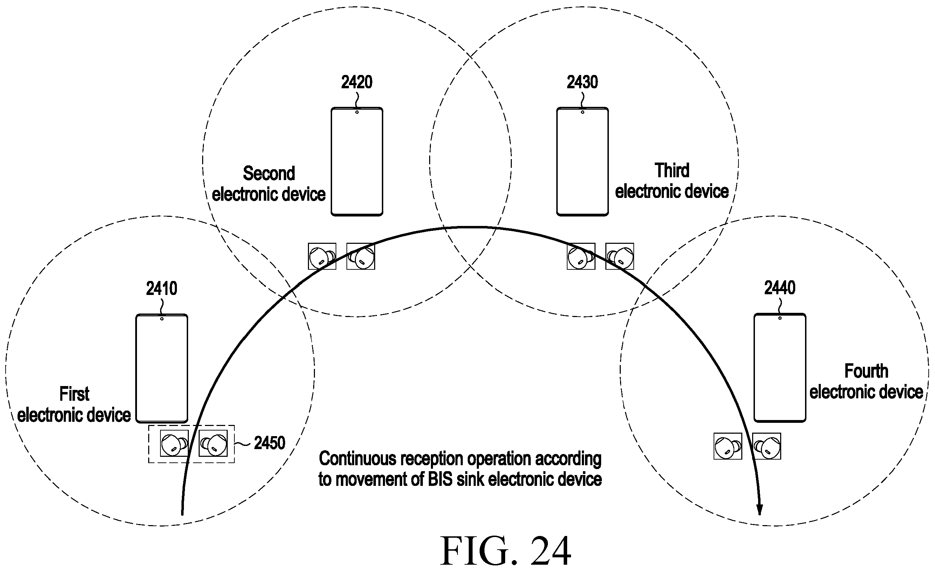

FIG. 24 illustrates an example of a continuous BIS data reception operation according to a movement of an electronic device according to an embodiment.

Referring to FIG. 24, a first electronic device 2410, a second electronic device 2420, a third electronic device 2430, and a fourth electronic device 2440 may operate as BIS sources, and a fifth electronic device 2450 may operate as a BIS sink. The fifth electronic device 2450 may move while receiving BIS data transmitted by any one of the first electronic device 2410, the second electronic device 2420, the third electronic device 2430, or the fourth electronic device 2440, and may have a weak electric field as it moves away from the electronic device transmitting the BIS data, making it difficult to receive the BIS data. However, if other electronic devices (at least one of the first electronic device 2410, the second electronic device 2420, the third electronic device 2430, or the fourth electronic device 2440) operating as one BIG are positioned when the fifth electronic device 2450 moves, BIS data transmitted from a nearby location may be received, and BIS data may be received and/or output without missing BIS data reception.

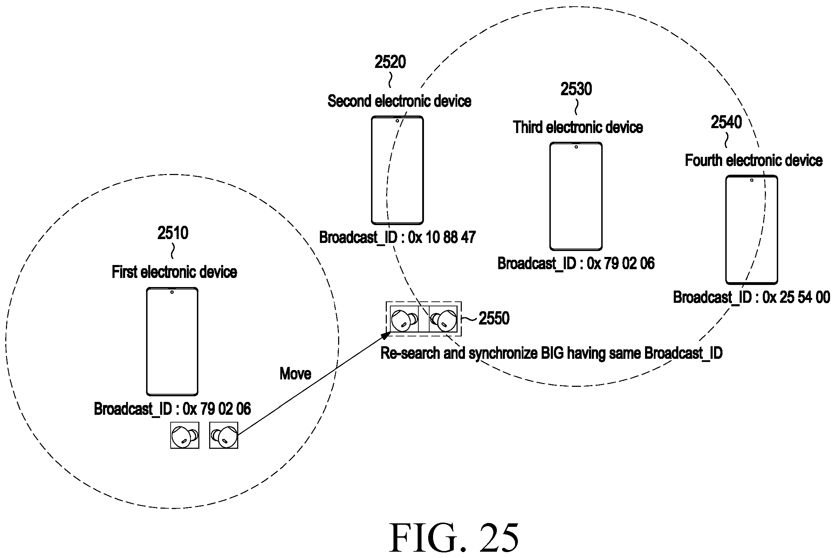

FIG. 25 illustrates an example of an operation of resynchronizing the same BIG according to a determination by an electronic device according to an embodiment.

Referring to FIG. 25, a first electronic device 2510, a second electronic device 2520, a third electronic device 2530, and a fourth electronic device 2540 may operate as BIS sources, and a fifth electronic device 2550 may operate as a BIS sink. A broadcast ID may be set for each of the first electronic device 2510, the second electronic device 2520, the third electronic device 2530, the fourth electronic device 2540, and the fifth electronic device 2550. One of the second electronic device 2520, the third electronic device 2530, and the fourth electronic device 2540 which may provide BIS data when moving while the fifth electronic device 2550 that receives the BIS data from the first electronic device 2510 may perform synchronization for BIS re-search and/or BIS reception based on the broadcast ID.

The fifth electronic device 2550 may scan by itself or through the first electronic device 2510 according to a specific criterion such as weakening of the signal of the BIS data transmitted by the first electronic device 2510, may scan whether there is a BIG for the same purpose as the already synchronized BIG therearound, and may determine whether there is a BIG for the same purpose using at least one of the scanned information. Thereafter, if necessary, the fifth electronic device 2550 may terminate the already synchronized BIG and then synchronize with the newly searched BIG.

For example, when the reception sensitivity of the corresponding BIS data is lowered to a predetermined level or less due to the occurrence of a physical distance difference in a state in which the fifth electronic device 2550 is synchronized with the BIG having Broadcast_ID: 9x 79 02 06 to receive BIS data, the scan may be restarted to identify whether there is a BIG having the same Broadcast_ID: 0x 79 02 06 around. When a BIG having the same Broadcast_ID is searched and it is determined that the reception sensitivity of the corresponding BIG is superior to that of the currently synchronized BIG, the fifth electronic device 2550 may terminate the previously synchronized BIG and synchronize with the new BIG to receive BIS data. This is not merely an operation limited to Broadcast_ID, but at least one piece of information among pieces of information capable of representing a specific BIG, such as the same program information (Program Info) and the same access address, may be used.

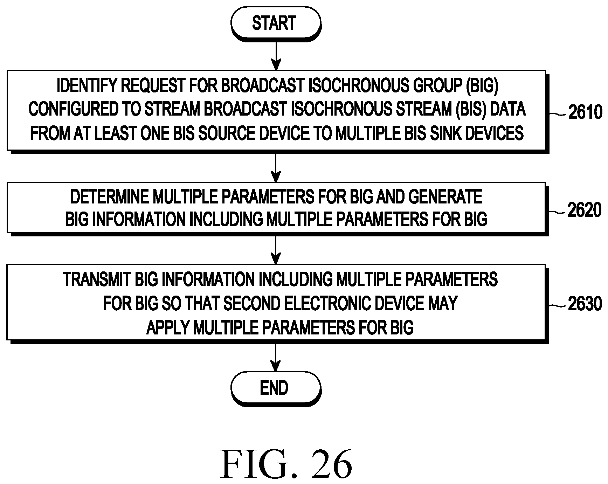

FIG. 26 is a view illustrating operations of a first electronic device generating BIG information according to an embodiment.

Referring to FIG. 26, in operation 2610, a first electronic device (e.g. 101 of FIG. 1; 300 of FIG. 3) may identify a request for a broadcast isochronous group (BIG) configured to stream BIS data from at least one broadcast isochronous stream (BIS) source device to a plurality of BIS sink devices. In operation 2620, the first electronic device (e.g. 101 of FIG. 1; 300 of FIG. 3) may determine a plurality of parameters for the BIG and may generate BIG information including the plurality of parameters for the BIG. In operation 2630, the first electronic device (e.g. 101 of FIG. 1; 300 of FIG. 3) may transmit the BIG information including the plurality of parameters for the BIG so that the second electronic device may apply the plurality of parameters for the BIG. The plurality of parameters for the BIG may be parameters for acting as a BIS source device for the BIG. The device (e.g. the second electronic device) receiving the parameters may apply the parameters for the BIG. That is, the BIG parameters may be used by an electronic device (e.g. the second electronic device) to allow that electronic device (e.g. the second electronic device) to function as a BIS source device for the BIG.

According to an embodiment, a first electronic device (e.g 101 of FIG. 1; 300 of FIG. 3) may comprise a communication circuit (e.g. 190 of FIG. 1), and at least one processor (e.g. 120 of FIG. 1) connected to the communication circuit (e.g. 190 of FIG. 1). The at least one processor may identify a request for a broadcast isochronous group (BIG) configured to stream broadcast isochronous stream (BIS) data from a plurality of BIS source devices including the electronic device to a plurality of BIS sink devices. The at least one processor may determine a plurality of parameters for the BIG, and generate the BIG based on the plurality of parameters for the BIG. The at least one processor may control to transmit periodic advertising (PA) and BIS data based on the plurality of parameters for the BIG. According to an embodiment, the request for the BIG may be identified based on at least one of a user input in the first electronic device, execution of an application in the first electronic device, a request received from an external electronic device, location information about the first electronic device, or network connection information of the first electronic device. The plurality of parameters for the BIG may be parameters for acting as a BIS source device for the BIG. The device (e.g. the second electronic device) receiving the parameters may apply the parameters for the BIG. That is, the BIG parameters may be used by an electronic device (e.g. the second electronic device) to allow that electronic device (e.g. the second electronic device) to function as a BIS source device for the BIG.

According to an embodiment, the plurality of parameters for the at least one BIG may include at least part of transmission time information for the BIS data, transmission power (Tx power) for the BIS data, transmission time information for the PA, or transmission power for the PA. According to an embodiment, the plurality of parameters for the at least one BIG may further include at least part of information indicating whether or not the BIS data is encrypted, a physical link type, an access address, a channel map, or a framing mode.

According to an embodiment, the at least one processor (e.g. 120 of FIG. 1) may control to transmit, to at least one of the plurality of BIS source devices, the BIG information including the plurality of parameters for the at least one BIG. According to an embodiment, the BIG information including the plurality of parameters for the at least one BIG may be transmitted through BLE advertising, PA transmission and reception, or an external network.

According to an embodiment, the BIG information including the plurality of parameters for the at least one BIG may include first BIG information including a plurality of parameters for a first source device among the plurality of BIS source devices, and second BIG information including a plurality of parameters for a second source device among the plurality of BIS source devices.

According to an embodiment, at least one of whether or not the first electronic device transmits a PA, transmission power of the first source device, a first number of subevent (NSE) for BIS data transmitted by the first source device, a first immediate repetition count (IRC), or a first pre-transmission offset (PTO) may be set based on the first BIG information. According to an embodiment, at least one of whether or not the second source device transmits a PA, transmission power of the second source device, a second NSE for BIS data transmitted by the second source device, a second IRC, or a second PTO may be set based on the second BIG information.

According to an embodiment, there may be provided a computer-readable storage medium storing at least one instruction. The at least one instruction may, when executed by at least one processor, enable an electronic device (e.g. 101 of FIG. 1; 300 of FIG. 3) to perform a plurality of operations. The plurality of operations may comprise identifying a request for a broadcast isochronous group (BIG) configured to stream broadcast isochronous stream (BIS) data from at least one BIS source device to a plurality of BIS sink devices. The plurality of operation may comprise determining a plurality of parameters for the BIG, and generating BIG information including the plurality of parameters for the at least one BIG. The plurality of operations may comprise transmitting the BIG information including the plurality of parameters for the at least one BIG so that a second electronic device can apply the plurality of parameters for the at least one BIG. The plurality of parameters for the BIG may be parameters for acting as a BIS source device for the BIG. The device (e.g. the second electronic device) receiving the parameters may apply the parameters for the BIG. That is, the BIG parameters may be used by an electronic device (e.g. the second electronic device) to allow that electronic device (e.g. the second electronic device) to function as a BIS source device for the BIG.

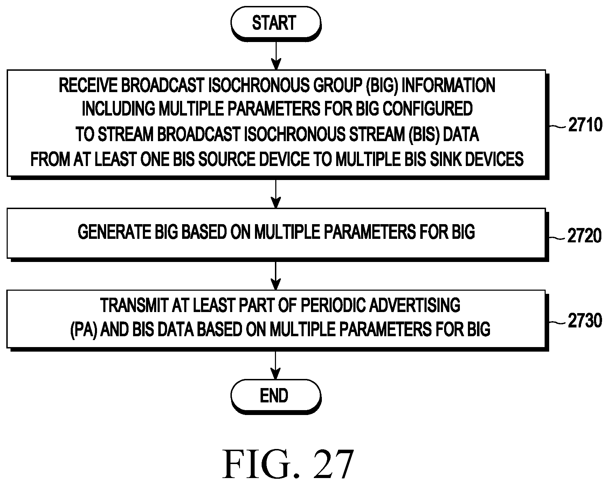

FIG. 27 is a view illustrating operations of a second electronic device receiving BIG information according to an embodiment.

Referring to FIG. 27, in operation 2710, a second electronic device (e.g. 101 of FIG. 1; 300 of FIG. 3) may receive, from a first electronic device, broadcast isochronous group (BIG) information including a plurality of parameters for a BIG configured to stream broadcast isochronous stream (BIS) data from at least one BIS source devices to a plurality of BIS sink devices. In operation 2720, the second electronic device (101 of FIG. 1; 300 of FIG. 3) may generate the BIG based on the plurality of parameters for the BIG. In operation 2730, the second electronic device (101 of FIG. 1; 300 of FIG. 3) may transmit at least part of periodic advertising (PA) and BIS data based on the plurality of parameters for the BIG. The plurality of parameters for the BIG may be parameters for acting as a BIS source device for the BIG. The second electronic device receiving the parameters may apply the parameters for the BIG. That is, the BIG parameters may be used by an electronic device (e.g. the second electronic device) to allow that electronic device (e.g. the second electronic device) to function as a BIS source device for the BIG.

According to an embodiment, there may be provided a computer-readable storage medium storing at least one instruction. The at least one instruction may, when executed by at least one processor, enable an electronic device (e.g. 101 in FIG. 1; 300 in FIG. 3) to perform a plurality of operations. The plurality of operations may comprise receiving, from a first electronic device, broadcast isochronous group (BIG) information including a plurality of parameters for a BIG configured to stream broadcast isochronous stream (BIS) data from at least one BIS source device to a plurality of BIS sink devices. The plurality of operations may comprise generating the BIG based on the plurality of parameters for the BIG. The plurality of operations may comprise transmitting at least part of a periodic advertising (PA) or BIS data based on the plurality of parameters for the BIG. The plurality of parameters for the BIG may be parameters for acting as a BIS source device for the BIG. The second electronic device receiving the parameters may apply the parameters for the BIG. That is, the BIG parameters may be used by an electronic device (e.g. the second electronic device) to allow that electronic device (e.g. the second electronic device) to function as a BIS source device for the BIG.

## Claims

1. A first electronic device (101; 300) comprising:
a communication circuit (190);
a processor (120) operatively connected to the communication circuit (190); and
memory (130) storing at least one instruction that, when executed by the processor (120), cause the electronic device (101; 300) to:
identify a request for at least one broadcast isochronous group, BIG, configured to stream broadcast isochronous stream, BIS, data from at least one BIS source device to a plurality of BIS sink devices;
determine a plurality of parameters for the at least one BIG, and generate BIG information including the plurality of parameters for the at least one BIG;
transmit the BIG information including the plurality of parameters for the at least one BIG so that a second electronic device can apply the plurality of parameters to act as a BIS source device for the at least one BIG; and
transmit the BIS data;
**characterized in that** the BIG information is set so that different BIG parameters are applied to different electronic devices belonging to the same BIG.

2. The first electronic device of claim 1, wherein the request for the at least one BIG is identified based on at least one of a user input in the first electronic device, execution of an application in the first electronic device, a request received from an external electronic device, location information about the first electronic device, or network connection information of the first electronic device.

3. The first electronic device of claim 1 or 2, wherein the plurality of parameters for the at least one BIG include at least part of transmission time information for the BIS data, transmission power, Tx power, for the BIS data, transmission time information for a periodic advertising, PA, or transmission power for the PA.

4. The first electronic device of claim 3, wherein the plurality of parameters for the at least one BIG further include at least part of information indicating whether or not the BIS data is encrypted, a physical link type, an access address, a channel map, or a framing mode .

5. The first electronic device of any one of claims 1 to 4, wherein the at least one processor (120) is configured to control to:
transmit, to at least one of the at least one BIS source device, the BIG information including the plurality of parameters for the at least one BIG.

6. The first electronic device of claim 5, wherein the BIG information including the plurality of parameters for the at least one BIG is transmitted through BLE advertising, PA transmission and reception, or an external network.

7. The first electronic device of any one of claims 1 to 6, wherein the BIG information including the plurality of parameters for the at least one BIG includes:
first BIG information including a plurality of parameters for a first source device among the at least one BIS source device; and
second BIG information including a plurality of parameters for a second source device among the at least one BIS source device.

8. The first electronic device of claim 7,
wherein at least one of whether or not the first electronic device transmits a PA, transmission power of the first source device, a first number of subevent, NSE, for BIS data transmitted by the first source device, a first immediate repetition count, IRC, or a first pre-transmission offset, PTO, is set based on the first BIG information, and
wherein at least one of whether or not the second source device transmits a PA, transmission power of the second source device, a second NSE for BIS data transmitted by the second source device, a second IRC, or a second PTO is set based on the second BIG information.

9. A second electronic device (101; 300) comprising:
a communication circuit (190);
a processor (120) connected to the communication circuit (190); and
memory (130) storing instructions that, when executed by the processor (120), cause the electronic device (101; 300) to:
receive, from a first electronic device, broadcast isochronous group, BIG, information including a plurality of parameters for a BIG configured to stream broadcast isochronous stream, BIS, data from at least one BIS source device to a plurality of BIS sink devices;
generate the BIG based on the plurality of parameters for the BIG; and
transmit at least part of a periodic advertising, PA, or BIS data based on the plurality of parameters for the BIG, wherein the BIS data is received from the first electronic device;
**characterized in that** the BIG information is set so that different BIG parameters are applied to different electronic devices belonging to the same BIG.

10. The second electronic device of claim 9, wherein the at least one processor (120) is configured to control to:
receive a first service data unit, SDU, in the second electronic device, and transmit a first PDU corresponding to the first SDU to an outside, as the BIS data; and
receive a second SDU in the second electronic device, and transmit a second PDU corresponding to the second SDU to the outside, as the BIS data.

11. The second electronic device of claim 9 or 10, wherein the plurality of parameters for the at least one BIG include at least part of transmission time information for the BIS data, transmission power, Tx power, for the BIS data, transmission time information for the PA, or transmission power for the PA.

12. The second electronic device of claim 11, wherein the plurality of parameters for the at least one BIG further include at least part of information indicating whether or not the BIS data is encrypted, a physical link type, an access address, a channel map, or a framing mode.

13. A method of operating a first electronic device (101; 300), the method comprising:
identifying a request for a broadcast isochronous group, BIG, configured to stream broadcast isochronous stream, BIS, data from at least one BIS source device to a plurality of BIS sink devices;
determining a plurality of parameters for the BIG, and generating BIG information including the plurality of parameters for the at least one BIG;
transmitting the BIG information including the plurality of parameters for the at least one BIG so that a second electronic device can apply the plurality of parameters to act as a BIS source device for the at least one BIG; and
transmitting the BIS data;
**characterized in that** the BIG information is set so that different BIG parameters are applied to different electronic devices belonging to the same BIG.

14. A method of operating a second electronic device (101; 300), the method comprising:
receiving, from a first electronic device, broadcast isochronous group, BIG, information including a plurality of parameters for a BIG configured to stream broadcast isochronous stream, BIS, data from at least one BIS source device to a plurality of BIS sink devices;
generating the BIG based on the plurality of parameters for the BIG; and
transmitting at least part of a periodic advertising, PA, or BIS data based on the plurality of parameters for the BIG;
**characterized in that** the BIG information is set so that different BIG parameters are applied to different electronic devices belonging to the same BIG.

15. A non-transitory computer-readable storage media storing computer-executable instructions that, when executed by a processor of a first electronic device, configure the first electronic device to perform operations comprising:
identifying a request for at least one broadcast isochronous group, BIG, configured to stream broadcast isochronous stream, BIS, data from at least one BIS source device to a plurality of BIS sink devices;
determining a plurality of parameters for the at least one BIG, and generating BIG information including the plurality of parameters for the at least one BIG; and
transmitting the BIG information including the plurality of parameters for the at least one BIG so that a second electronic device can apply the plurality of parameters to act as a BIS source device for the at least one BIG; and
transmitting the BIS data;
**characterized in that** the BIG information is set so that different BIG parameters are applied to different electronic devices belonging to the same BIG.

## Patentansprüche

1. Erste elektronische Vorrichtung (101; 300), umfassend:
eine Kommunikationsschaltung (190);
einen Prozessor (120), der mit der Kommunikationsschaltung (190) wirkverbunden ist; und
Speicher (130), der zumindest eine Anweisung speichert, die, wenn durch den Prozessor (120) ausgeführt, die elektronische Vorrichtung (101; 300) zu Folgendem veranlasst:
Identifizieren einer Anforderung für zumindest eine isochrone Rundfunkgruppe, BIG, die dazu konfiguriert ist, isochrone Rundfunk-Stream-, BIS-Daten von zumindest einer BIS-Quellenvorrichtung zu einer Vielzahl von BIS-Senkenvorrichtungen zu streamen;
Bestimmen einer Vielzahl von Parametern für die zumindest eine BIG und Erzeugen von BIG-Informationen, welche die Vielzahl von Parametern für die zumindest eine BIG beinhalten;
Übertragen der BIG-Informationen, welche die Vielzahl von Parametern für die zumindest eine BIG beinhalten, sodass eine zweite elektronische Vorrichtung die Vielzahl von Parametern anwenden kann, um als eine BIS-Quellenvorrichtung für die zumindest eine BIG zu fungieren; und
Übertragen der BIS-Daten;
**dadurch gekennzeichnet, dass**
die BIG-Informationen festgelegt sind, sodass verschiedene BIG-Parameter auf verschiedene elektronische Vorrichtungen, die zu derselben BIG gehören, angewendet werden.

2. Erste elektronische Vorrichtung nach Anspruch 1, wobei die Anforderung für die zumindest eine BIG basierend auf zumindest einem von einer Benutzereingabe in der ersten elektronischen Vorrichtung, Ausführung einer Anwendung in der ersten elektronischen Vorrichtung, einer Anforderung, die von einer externen elektronischen Vorrichtung empfangen wird, Standortinformationen über die erste elektronische Vorrichtung oder Netzwerkverbindungsinformationen der ersten elektronischen Vorrichtung identifiziert wird.

3. Erste elektronische Vorrichtung nach Anspruch 1 oder 2, wobei die Vielzahl von Parametern für die zumindest eine BIG zumindest Teil von Übertragungszeitinformationen für die BIS-Daten, Übertragungsleistung, Tx-Leistung, für die BIS-Daten, Übertragungszeitinformationen für eine periodische Werbung, PA oder Übertragungsleistung für die PA beinhaltet.

4. Erste elektronische Vorrichtung nach Anspruch 3, wobei die Vielzahl von Parametern für die zumindest eine BIG ferner zumindest Teil von Informationen beinhaltet, die Folgendes angeben: ob die BIS-Daten verschlüsselt sind oder nicht, einen physischen Verknüpfungstyp, eine Zugriffsadresse, eine Kanalzuordnung oder einen Framing-Modus.

5. Erste elektronische Vorrichtung nach einem der Ansprüche 1 bis 4, wobei der zumindest eine Prozessor (120) dazu konfiguriert ist, Folgendes zu steuern:
Übertragen, an zumindest eine von der zumindest einen BIS-Quellenvorrichtung, der BIG-Informationen, welche die Vielzahl von Parametern für die zumindest eine BIG beinhalten.

6. Erste elektronische Vorrichtung nach Anspruch 5, wobei die BIG-Informationen, welche die Vielzahl von Parametern für die zumindest eine BIG beinhalten, durch BLE-Werbung, PA-Übertragung und -Empfang oder ein externes Netzwerk übertragen werden.

7. Erste elektronische Vorrichtung nach einem der Ansprüche 1 bis 6, wobei die BIG-Informationen, welche die Vielzahl von Parametern für die zumindest eine BIG beinhalten, Folgendes beinhalten:
erste BIG-Informationen, die eine Vielzahl von Parametern für eine erste Quellenvorrichtung unter der zumindest einen BIS-Quellenvorrichtung beinhalten; und
zweite BIG-Informationen, die eine Vielzahl von Parametern für eine zweite Quellenvorrichtung unter der zumindest einen BIS-Quellenvorrichtung beinhalten.

8. Erste elektronische Vorrichtung nach Anspruch 7,
wobei zumindest eines davon, ob die erste elektronische Vorrichtung eine PA überträgt oder nicht, Übertragungsleistung der ersten Quellenvorrichtung, einer ersten Anzahl an Unterereignissen, NSE, für BIS-Daten, die durch die erste Quellenvorrichtung übertragen werden, einem ersten sofortigen Wiederholungszählwert, IRC, oder einem ersten Vorübertragungsversatz, PTO, basierend auf den ersten BIG-Informationen festgelegt wird, und
wobei zumindest eines davon, ob die zweite Quellenvorrichtung eine PA überträgt oder nicht, Übertragungsleistung der zweiten Quellenvorrichtung, einer zweiten NSE für BIS-Daten, die durch die zweite Quellenvorrichtung übertragen werden, einem zweiten IRC oder einem zweiten PTO basierend auf den zweiten BIG-Informationen festgelegt wird.

9. Zweite elektronische Vorrichtung (101; 300), umfassend:
eine Kommunikationsschaltung (190);
einen Prozessor (120), der mit der Kommunikationsschaltung (190) verbunden ist; und
Speicher (130), der Anweisungen speichert, die, wenn durch den Prozessor (120) ausgeführt, die elektronische Vorrichtung (101; 300) zu Folgendem veranlassen:
Empfangen, von einer ersten elektronischen Vorrichtung, von isochronen Rundfunkgruppen-, BIG-Informationen, die eine Vielzahl von Parametern für eine BIG beinhalten, die dazu konfiguriert ist, isochrone Rundfunk-Stream-, BIS-Daten von zumindest einer BIS-Quellenvorrichtung zu einer Vielzahl von BIS-Senkenvorrichtungen zu streamen;
Erzeugen der BIG basierend auf der Vielzahl von Parametern für die BIG; und
Übertragen von zumindest Teil einer periodischen Werbung, PA, oder BIS-Daten basierend auf der Vielzahl von Parametern für die BIG, wobei die BIS-Daten von der ersten elektronischen Vorrichtung empfangen werden;
**dadurch gekennzeichnet, dass**
die BIG-Informationen festgelegt sind, sodass verschiedene BIG-Parameter auf verschiedene elektronische Vorrichtungen, die zu derselben BIG gehören, angewendet werden.

10. Zweite elektronische Vorrichtung nach Anspruch 9, wobei der zumindest eine Prozessor (120) ferner dazu konfiguriert ist, Folgendes zu steuern:
Empfangen einer ersten Dienstdateneinheit, SDU, in der zweiten elektronischen Vorrichtung und Übertragen einer ersten PDU entsprechend der ersten SDU zu einer Außenseite als die BIS-Daten; und
Empfangen einer zweiten SDU in der zweiten elektronischen Vorrichtung und Übertragen einer zweiten PDU entsprechend der zweiten SDU zu der Außenseite als die BIS-Daten.

11. Zweite elektronische Vorrichtung nach Anspruch 9 oder 10, wobei die Vielzahl von Parametern für die zumindest eine BIG zumindest Teil von Übertragungszeitinformationen für die BIS-Daten, Übertragungsleistung, Tx-Leistung, für die BIS-Daten, Übertragungszeitinformationen für die PA oder Übertragungsleistung für die PA beinhaltet.

12. Zweite elektronische Vorrichtung nach Anspruch 11, wobei die Vielzahl von Parametern für die zumindest eine BIG ferner zumindest Teil von Informationen beinhaltet, die Folgendes angeben: ob die BIS-Daten verschlüsselt sind oder nicht, einen physischen Verknüpfungstyp, eine Zugriffsadresse, eine Kanalzuordnung oder einen Framing-Modus.

13. Verfahren zum Betreiben einer ersten elektronischen Vorrichtung (101; 300), wobei das Verfahren Folgendes umfasst:
Identifizieren einer Anforderung für eine isochrone Rundfunkgruppe, BIG, die dazu konfiguriert ist, isochrone Rundfunk-Stream-, BIS-Daten von zumindest einer BIS-Quellenvorrichtung zu einer Vielzahl von BIS-Senkenvorrichtungen zu streamen;
Bestimmen einer Vielzahl von Parametern für die BIG und Erzeugen von BIG-Informationen, welche die Vielzahl von Parametern für die zumindest eine BIG beinhalten;
Übertragen der BIG-Informationen, welche die Vielzahl von Parametern für die zumindest eine BIG beinhalten, sodass eine zweite elektronische Vorrichtung die Vielzahl von Parametern anwenden kann, um als eine BIS-Quellenvorrichtung für die zumindest eine BIG zu fungieren; und
Übertragen der BIS-Daten;
**dadurch gekennzeichnet, dass**
die BIG-Informationen festgelegt sind, sodass verschiedene BIG-Parameter auf verschiedene elektronische Vorrichtungen, die zu derselben BIG gehören, angewendet werden.

14. Verfahren zum Betreiben einer zweiten elektronischen Vorrichtung (101; 300), wobei das Verfahren Folgendes umfasst:
Empfangen, von einer ersten elektronischen Vorrichtung, von isochronen Rundfunkgruppen-, BIG-Informationen, die eine Vielzahl von Parametern für eine BIG beinhalten, die dazu konfiguriert ist, isochrone Rundfunk-Stream-, BIS-Daten von zumindest einer BIS-Quellenvorrichtung zu einer Vielzahl von BIS-Senkenvorrichtungen zu streamen;
Erzeugen der BIG basierend auf der Vielzahl von Parametern für die BIG; und
Übertragen von zumindest Teil einer periodischen Werbung, PA oder BIS-Daten basierend auf der Vielzahl von Parametern für die BIG;
**dadurch gekennzeichnet, dass**
die BIG-Informationen festgelegt sind, sodass verschiedene BIG-Parameter auf verschiedene elektronische Vorrichtungen, die zu derselben BIG gehören, angewendet werden.

15. Nichtflüchtiges computerlesbares Speichermedium, das computerausführbare Anweisungen speichert, die, wenn durch einen Prozessor einer ersten elektronischen Vorrichtung ausgeführt, die erste elektronische Vorrichtung dazu konfigurieren, Vorgänge durchzuführen, umfassend:
Identifizieren einer Anforderung für zumindest eine isochrone Rundfunkgruppe, BIG, die dazu konfiguriert ist, isochrone Rundfunk-Stream-, BIS-Daten von zumindest einer BIS-Quellenvorrichtung zu einer Vielzahl von BIS-Senkenvorrichtungen zu streamen;
Bestimmen einer Vielzahl von Parametern für die zumindest eine BIG und Erzeugen von BIG-Informationen, welche die Vielzahl von Parametern für die zumindest eine BIG beinhalten; und
Übertragen der BIG-Informationen, welche die Vielzahl von Parametern für die zumindest eine BIG beinhalten, sodass eine zweite elektronische Vorrichtung die Vielzahl von Parametern anwenden kann, um als eine BIS-Quellenvorrichtung für die zumindest eine BIG zu fungieren; und
Übertragen der BIS-Daten;
**dadurch gekennzeichnet, dass**
die BIG-Informationen festgelegt sind, sodass verschiedene BIG-Parameter auf verschiedene elektronische Vorrichtungen, die zu derselben BIG gehören, angewendet werden.

## Revendications

1. Premier dispositif électronique (101 ; 300) comprenant :
un circuit de communication (190) ;
un processeur (120) connecté fonctionnellement au circuit de communication (190) ; et
une mémoire (130) stockant au moins une instruction qui, lorsqu'elle est exécutée par le processeur (120), amène le dispositif électronique (101 ; 300) à :
identifier une demande pour au moins un groupe isochrone de diffusion, BIG, configuré pour diffuser en continu des données de flux isochrone de diffusion, BIS, à partir d'au moins un dispositif source BIS vers une pluralité de dispositifs dissipateurs BIS ;
déterminer une pluralité de paramètres pour l'au moins un BIG, et générer des informations BIG comprenant la pluralité de paramètres pour l'au moins un BIG ;
transmettre les informations BIG comprenant la pluralité de paramètres pour l'au moins un BIG afin qu'un second dispositif électronique puisse appliquer la pluralité de paramètres pour agir en tant que dispositif source BIS pour l'au moins un BIG ; et
transmettre les données BIS ;
**caractérisé en ce que**
les informations BIG sont définies afin que différents paramètres BIG soient appliqués à différents dispositifs électroniques appartenant au même BIG.

2. Premier dispositif électronique de la revendication 1, ladite demande pour ledit au moins un BIG étant identifiée sur la base d'au moins l'un d'une entrée d'utilisateur dans le premier dispositif électronique, d'une exécution d'une application dans le premier dispositif électronique, d'une demande reçue en provenance d'un dispositif électronique externe, d'informations d'emplacement concernant le premier dispositif électronique, ou d'informations de connexion de réseau du premier dispositif électronique.

3. Premier dispositif électronique de la revendication 1 ou 2, ladite pluralité de paramètres pour l'au moins un BIG comprenant au moins une partie d'informations de temps de transmission pour les données BIS, de la puissance de transmission, puissance Tx, pour les données BIS, des informations de temps de transmission pour une annonce périodique, PA, ou de puissance de transmission pour la PA.

4. Premier dispositif électronique de la revendication 3, ladite pluralité de paramètres pour l'au moins un BIG comprenant en outre au moins une partie d'informations indiquant si les données BIS sont chiffrées ou non, un type de lien physique, une adresse d'accès, une carte de canal, ou un mode de tramage.

5. Premier dispositif électronique de l'une quelconque des revendications 1 à 4, ledit au moins un processeur (120) étant configuré pour commander pour :
transmettre, à au moins l'un du au moins un dispositif source BIS, les informations BIG comprenant la pluralité de paramètres pour l'au moins un BIG.

6. Premier dispositif électronique de la revendication 5, lesdites informations BIG comprenant la pluralité de paramètres pour l'au moins un BIG étant transmises par l'intermédiaire d'une annonce BLE, d'une transmission et d'une réception de PA, ou d'un réseau externe.

7. Premier dispositif électronique de l'une quelconque des revendications 1 à 6, lesdites informations BIG comprenant la pluralité de paramètres pour l'au moins un BIG comprenant :
des premières informations BIG comprenant une pluralité de paramètres pour un premier dispositif source parmi l'au moins un dispositif source BIS ; et
des secondes informations BIG comprenant une pluralité de paramètres pour un second dispositif source parmi l'au moins un dispositif source BIS.

8. Premier dispositif électronique de la revendication 7,
au moins l'un parmi, que le premier dispositif électronique transmette ou non une PA, une puissance de transmission du premier dispositif source, un premier nombre de sous-événements, NSE, pour des données BIS transmises par le premier dispositif source, un premier compte de répétition immédiat, IRC, ou un premier décalage de prétransmission, PTO, étant défini sur la base des premières informations BIG, et
au moins l'un parmi que le second dispositif source transmette ou non une PA, une puissance de transmission du second dispositif source, un second NSE pour des données BIS transmises par le second dispositif source, un second IRC ou une seconde PTO étant défini sur la base des secondes information BIG.

9. Second dispositif électronique (101 ; 300) comprenant :
un circuit de communication (190) ;
un processeur (120) connecté au circuit de communication (190) ; et
une mémoire (130) stockant des instructions qui, lorsqu'elles sont exécutées par le processeur (120), amènent le dispositif électronique (101 ; 300) à :
recevoir, à partir d'un premier dispositif électronique, des informations de groupe isochrone de diffusion, BIG, comprenant une pluralité de paramètres pour un BIG configuré pour diffuser en continu des données de flux isochrone de diffusion, BIS, à partir d'au moins un dispositif source BIS vers une pluralité de dispositifs dissipateurs BIS ;
générer le BIG sur la base de la pluralité de paramètres pour le BIG ; et
transmettre au moins une partie de données d'annonce périodique, PA, ou BIS sur la base de la pluralité de paramètres pour le BIG, les données BIS étant reçues du premier dispositif électronique ;
**caractérisé en ce que**
les informations BIG sont définies afin que différents paramètres BIG soient appliqués à différents dispositifs électroniques appartenant au même BIG.

10. Second dispositif électronique de la revendication 9, ledit au moins un processeur (120) étant configuré pour commander pour :
recevoir une première unité de données de service, SDU, dans le second dispositif électronique, et transmettre une première PDU correspondant à la première SDU à un extérieur, en tant que données BIS ; et
recevoir une seconde SDU dans le second dispositif électronique, et transmettre une seconde PDU correspondant à la seconde SDU à l'extérieur, en tant que données BIS.

11. Second dispositif électronique de la revendication 9 ou 10, ladite pluralité de paramètres pour l'au moins un BIG comprenant au moins une partie d'informations de temps de transmission pour les données BIS, de puissance de transmission, puissance Tx, pour les données BIS, d'informations de temps de transmission pour la PA, ou de puissance de transmission pour la PA.

12. Second dispositif électronique de la revendication 11, ladite pluralité de paramètres pour l'au moins un BIG comprenant en outre au moins une partie d'informations indiquant si les données BIS sont chiffrées ou non, d'un type de lien physique, d'une adresse d'accès, d'une carte de canal, ou d'un mode de tramage.

13. Procédé de fonctionnement d'un premier dispositif électronique (101 ; 300), le procédé comprenant :
l'identification d'une demande pour un groupe isochrone de diffusion, BIG, configuré pour diffuser en continu des données de flux isochrone de diffusion, BIS, à partir d'au moins un dispositif source BIS vers une pluralité de dispositifs dissipateurs BIS ;
la détermination d'une pluralité de paramètres pour le BIG, et la génération des informations BIG comprenant la pluralité de paramètres pour l'au moins un BIG ;
la transmission des informations BIG comprenant la pluralité de paramètres pour l'au moins un BIG afin qu'un second dispositif électronique puisse appliquer la pluralité de paramètres pour agir en tant que dispositif source BIS pour l'au moins un BIG ; et
la transmission des données BIS ;
**caractérisé en ce que**
les informations BIG sont définies afin que différents paramètres BIG soient appliqués à différents dispositifs électroniques appartenant au même BIG.

14. Procédé de fonctionnement d'un second dispositif électronique (101 ; 300), le procédé comprenant :
la réception, en provenance d'un premier dispositif électronique, d'informations de groupe isochrone de diffusion, BIG, comprenant une pluralité de paramètres pour un BIG configuré pour diffuser en continu des données de flux isochrone de diffusion, BIS, à partir d'au moins un dispositif source BIS vers une pluralité de dispositifs dissipateurs BIS ;
la génération du BIG sur la base de la pluralité de paramètres pour le BIG ; et
la transmission d'au moins une partie de données d'annonce périodique, PA, ou BIS sur la base de la pluralité de paramètres pour le BIG ;
**caractérisé en ce que**
les informations BIG sont définies afin que différents paramètres BIG soient appliqués à différents dispositifs électroniques appartenant au même BIG.

15. Support de stockage lisible par ordinateur non transitoire stockant des instructions exécutables par ordinateur qui, lorsqu'elles sont exécutées par un processeur d'un premier dispositif électronique, configurent le premier dispositif électronique pour réaliser des opérations comprenant :
l'identification d'une demande pour au moins un groupe isochrone de diffusion, BIG, configuré pour diffuser en continu des données de flux isochrone de diffusion, BIS, à partir d'au moins un dispositif source BIS vers une pluralité de dispositifs dissipateurs BIS ;
la détermination d'une pluralité de paramètres pour l'au moins un BIG, et ladite génération d'informations BIG comprenant la pluralité de paramètres pour l'au moins un BIG ; et
la transmission des informations BIG comprenant la pluralité de paramètres pour l'au moins un BIG afin qu'un second dispositif électronique puisse appliquer la pluralité de paramètres pour agir en tant que dispositif source BIS pour l'au moins un BIG ; et
la transmission des données BIS ;
**caractérisé en ce que**
les informations BIG sont définies afin que différents paramètres BIG soient appliqués à différents dispositifs électroniques appartenant au même BIG.
